(19) Europäisches Patentamt / European Patent Office / Office européen des brevets

(11) **EP 3 396 913 B1**

(12) **EUROPEAN PATENT SPECIFICATION**

(45) Date of publication and mention of the grant of the patent:
**17.06.2020 Bulletin 2020/25**

(21) Application number: **16877141.8**

(22) Date of filing: **24.03.2016**

(51) Int Cl.:
*H04L 27/18* (2006.01)    *H04L 27/20* (2006.01)

(86) International application number:
**PCT/CN2016/077211**

(87) International publication number:
**WO 2017/107327 (29.06.2017 Gazette 2017/26)**

(54) **CPM MODULATION DIGITIZATION IMPLEMENTATION METHOD BASED ON TABLE LOOKUP METHOD, AND DIGITAL CPM MODULATION MODULE**

VERFAHREN ZUR IMPLEMENTIERUNG VON CPM-MODULATIONSDIGITALISIERUNG AUF DER BASIS EINES TABELLENNACHSCHLAGVERFAHRENS UND DIGITALES CPM-MODULATIONSMODUL

PROCÉDÉ DE MISE EN OEUVRE DE NUMÉRISATION DE MODULATION CPM BASÉ SUR UN PROCÉDÉ DE CONSULTATION DE TABLE, ET MODULE DE MODULATION CPM NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2015 CN 201510993516**

(43) Date of publication of application:
**31.10.2018 Bulletin 2018/44**

(73) Proprietors:
- **Beijing Research Institute of Telemetry**
  **Beijing 100076 (CN)**
- **Aerospace Long March Launch Vehicle Technology Co. Ltd.**
  **Beijing 100076 (CN)**

(72) Inventors:
- **CHANG, Hongyu**
  **Beijing 100094 (CN)**
- **DING, Xingwen**
  **Beijing 100094 (CN)**

- **CHEN, Ming**
  **Beijing 100076 (CN)**

(74) Representative: **Lavoix**
  **Bayerstrasse 83**
  **80335 München (DE)**

(56) References cited:
EP-A2- 1 198 099     CN-A- 101 834 818
CN-A- 102 387 098    CN-Y- 201 352 797
US-A- 5 832 022      US-B2- 8 009 761

- JIA, ZHE et al.: "Design and Implementation of a Quaternary CPM Modulator with FPGA", TELECOMMUNICATION ENGINEERING, vol. 2006, no. 5, 31 October 2006 (2006-10-31), XP009512053, ISSN: 1001-893X
- ZHENG, HONGMING et al.: "A Turbo CDMA System with CPM Spreading Modulation", CHINESE JOURNAL OF ELECTRONICS, vol. 30, no. 10, 31 October 2002 (2002-10-31), pages 1466-1469, XP009511912,

## Description

This application claims the priority to the Chinese Patent Application No. 201510993516.5, titled "CPM MODULATION DIGITIZATION IMPLEMENTATION METHOD BASED ON TABLE LOOKUP METHOD, AND DIGITAL CPM MODULATION MODULE" and filed with the Chinese State Intellectual Property Office on December 25, 2015.

## FIELD

The present disclosure relates to a CPM modulation digitization implementation method based on a table lookup method and a CPM modulation digitization module, which belong to the technical filed of digital signal processing.

## BACKGROUND

The CPM modulation mechanism has a constant envelope and a continuous phase, and has a large bandwidth and high spectrum utilization efficiency. Furthermore, its constant envelope makes a non-linear power amplifier has good robustness. Therefore, the CPM modulation mechanism has a wide application prospect.

The CPM modulation has multiple different forms, such as PCM/FM, GMSK, SOQPSK and multi-index CPM, depending on modulation parameters such as the number system of symbols, a correlation length, a modulation index and a phase pulse function.

At present, a direct implementation method is to calculate a phase of a modulated signal according to an expression of the modulated signal, and then obtain a CPM modulated signal by looking up a table or using Cordic algorithm. A phase of a CPM baseband modulated signal having a single modulation index is calculated as follows:

$$\varphi(t;\mathbf{a}) = \pi h \sum a_i + 2\pi h \sum a_i q(t - iT), \qquad nT \le t < (n+1)T$$

where $a_i$ denotes an $i$-th symbol, $a_i \in \{\pm 1, \pm 3, ..., \pm (M-1)\}$, $h$ denotes a modulation index, $L$ denotes a correlation length and is also referred to as memory length, $q(t)$ denotes a phase pulse function and is an integral of a frequency pulse function $g(t)$. In a case that the phase of the CPM baseband modulated signal is calculated according to the above equation, $L$ multipliers are required to implement a multiplication operation of multiplying $h$ by $q(t - iT)$, and $(L-1)$ adders are required to implement a summation operation, which results in high complexity.

The table lookup method has a low complexity to implement the CPM modulation, in which a phase of a modulated signal is calculated in advance and stored in a phase table, and the phase table is looked up when performing the CPM modulation. A binary continuous phase intermediate frequency modulator based on DDS is introduced in a paper titled "FPGA IMPLEMENTATION OF CPM MODULATOR" (published in Tactical Communication Research, September, 2010, Volume 7, Issue 3, Pages 49-51) by ZENG Xiangwen, et al. Four trigonometric function lookup tables, four multipliers and two adders are used in implementing CPM baseband modulation, which has a relatively high complexity, and can implement only binary full-response CPM modulation having a single modulation index.

A method of designing a quaternary CPM modulator based on FPGA is provided in a paper titled "DESIGN AND FPGA IMPLEMENTATION OF QUATERNARY CPM MODULATOR" (published in Telecommunication Engineering, Issue 5 in 2006, JIA Zhe, ZHENG Xiang), in which a baseband modulation module is implemented using a table lookup method. Two trigonometric function lookup tables and one phase lookup table are used in the implementation. As compared with the previous paper, storage resources and multiplication resources are saved, and implementation complexity is low. However, this paper does not provide an implementation method for multi-index CPM and M-ary CPM modulation having a large correlation length, such as ARTM CPM which is a multi-index CPM modulation, and SOQPSK-TG modulation having a correlation length of L=8. In addition, one phase lookup table may be insufficient to contain information on the phase of the modulated signal, which is also not analyzed in this paper- see also CN 102 387 098 A (SHANGHAI TRANSCOM INSTR TECHNOLOGY CO LTD) 21 March 2012.

## SUMMARY

In order to overcome the above deficiencies in the conventional technology, an objective of the present disclosure is to provide a CPM modulation digitization implementation method based on a table lookup method. The method has a simple implementation, a low complexity and a wide application scope. A phase table established with the method is associated with a sampling time, thereby ensuring phase continuousness of CPM modulation, having high implementation accuracy, and facilitating coherent demodulation of a receiver.

Another objective of the present disclosure is to provide a CPM modulation digitization module based on a table lookup method.

The above objectives of the present disclosure are mainly implemented with the following technical solutions.

The CPM modulation digitization implementation method based on a table lookup method includes: step (1), establishing a phase table according to a mathematical expression of a CPM baseband modulated signal, where the phase table includes an addressing address and a relative phase corresponding to the addressing address; step (2), generating a symbol pulse under control of a sampling clock, and delaying a current input symbol $a_n$ under control of the symbol pulse, to obtain $(L+1)$ continuous symbols $a_n, a_{n-1}, ..., a_{n-L+1}, a_{n-L}$; step (3), addressing the phase table established in step (1) using an addressing address $[h_{(n)}, a_n, a_{n-1}, ..., a_{n-L+1}, d]$ formed by a modulation index $h_{(n)}$ corresponding to the current symbol $a_n$, $L$ continuous symbols $a_n, ..., a_{n-L+1}$ and a current sampling time d, to obtain a relative phase $\phi_n(t)$; step (4) calculating an accumulative phase increment $\delta$ based on the symbol $a_{n-L}$ and a modulation index $h_{(n-L)}$ corresponding to the symbol $a_{n-L}$ according to an equation $\delta = \pi h_{(n-L)} a_{n-L}$; step (5) adding the accumulative phase increment $\delta$ to an accumulative phase $\theta_{n-L-1}$ at the end of a period of a previous symbol $a_{n-L-1}$ under control of the symbol pulse generated in step (2), to obtain an accumulative phase $\theta_{n-L}$ at the end of a period of the symbol $a_{n-L}$; step (6) adding the relative phase $\phi_n(t)$ obtained in step (3) to the accumulative phase $\theta_{n-L}$ obtained in step (5), to obtain a phase $\varphi_n(t)$ of the CPM baseband modulated signal; step (7) looking up a sine table and a cosine table using the phase $\varphi_n(t)$, to obtain orthogonal signals $\cos\varphi_n(t)$ and $\cos\varphi_n(t)$, to complete CPM baseband modulation.

In the CPM modulation digitization method based on the table lookup method described above, the step (1) of establishing the phase table according to the mathematical expression of the CPM baseband modulated signal includes: obtaining a discrete expression of the relative phase $\phi_n(t)$ in the mathematical expression of the CPM baseband modulated

signal as $\phi_n(j) = 2\pi \sum_{i=n-L+1}^{n} a_i h_{(i)} q_{n-i}(j)$, $j = 0, 1, ..., 2^N - 1$; obtaining a relative phase value $\phi_n(j)$ corresponding to a combination $[h_{(n)}, a_n, a_{n-1}, ..., a_{n-L+1}, j]$ according to the discrete expression of $\phi_n(t)$ ; and establishing the phase table by taking $[h_{(n)}, a_n, a_{n-1}, ..., a_{n-L+1}, j]$ as the addressing address and taking $\phi_n(j)$ as the relative phase value corresponding to the addressing address, where $a_i$ denotes an $i$-th $M$-ary symbol, $a_i \in \{\pm 1, ..., \pm(M-1)\}$, $h_{(i)}$ denotes a modulation index corresponding to the $i$-th symbol $a_i$, a value of $h_{(i)}$ comes from an index set $\{h_0, h_1, ..., h_{R-1}\}$ periodically with a period $R$, a subscript $(i)$ denotes $i$ modulo $R$, $q_{n-i}(j)$ is a discrete expression of a phase pulse function $q(t)$, $L$ is a correlation length, and $j$ is a sequence number of a sampling point.

In the CPM modulation digitization implementation method based on the table lookup method described above, the obtaining the discrete expression of the relative phase $\phi_n(t)$ in the mathematical expression of the CPM baseband modulated signal includes step (1) to step (2).

In step (1), the mathematical expression $s(t) = \sqrt{\dfrac{2E}{T}} \exp\left\{-j\varphi(t)\right\}$ of the CPM baseband modulated signal is obtained, where $E$ is symbol energy, $T$ is a symbol period, and $\varphi(t)$ is a phase of the modulated signal and is represented as:

$$\varphi(t) = \pi \sum_{i=0}^{n-L} a_i h_{(i)} + 2\pi \sum_{i=n-L+1}^{n} a_i h_{(i)} q(t-iT), \qquad nT \le t < (n+1)T$$

It is assumed that $\theta_{n-L} = \pi \sum_{i=0}^{n-L} a_i h_{(i)}$ and $\phi_n(t) = 2\pi \sum_{i=n-L+1}^{n} a_i h_{(i)} q(t-iT)$, where $\theta_{n-L}$ denotes an accumulative phase, $\phi_n(t)$ denotes a relative phase, $t$ denotes time, $q(t)$ is a phase pulse function and is represented as:

$$q(t) = \begin{cases} 0, & t \le 0 \\ \int_0^t g(\tau)d\tau, & 0 < t \le LT \\ 1/2, & t > LT \end{cases}$$

where $g(t)$ is a frequency pulse function.

In step (2), the final discrete expression of the relative phase $\phi_n(t)$ is determined by steps (a) to (c).

In step (a), $q(t)$ is discretized in an interval of $0 < t \leq LT$, where assuming that there are $2^N$ sampling points in one symbol period, a discrete expression of $q(t)$ is represented as:

$$q_k(j) = q(t)\Big|_{t=kT+jT_s}$$
$$= q\left(kT + jT_s\right), \quad k = 0,1,...,L-1, j = 0,1,...,2^N - 1$$

where $T_s$ denotes a sampling period.

In step (b), $\phi_n(t)$ is discretized in the interval of $0 < t \leq LT$, according to an equation:

$$\phi_n(j) = \phi_n(t)\Big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q\left((n-i)T + jT_s\right)$$

In step (c), an expression $q((n - i)T + jT_s) = q_{n-i}(j)$ is obtained from step (a), and the expression $q((n - i)T + jT_s) = q_{n-i}(j)$ is substituted into the equation in step (b), to obtain the final discrete expression of $\phi_n(t)$:

$$\phi_n(j) = 2\pi \sum_{i=n-L+1}^{n} a_i h_{(i)} q_{n-i}(j), \quad j = 0,1,...,2^N - 1$$

In the CPM modulation digitization implementation method based on the table lookup method described above, in a case that one phase table is insufficient to contain information on the relative phase of the CPM baseband modulated signal, the relative phase $\phi_n(j)$ may be divided into two or more terms a sum of which is the relative phase $\phi_n(j)$, and two or more phase tables are established. When performing the CPM baseband modulation, the two or more phase tables are addressed based on the addressing address, and address results are added together to obtain the relative phase $\phi_n(t)$ of the CPM baseband modulated signal.

In the CPM modulation digitization implementation method based on the table lookup method described above, if the relative phase $\phi_n(j)$ is divided into two or more terms, a sum of which is the relative phase $\phi_n(j)$, an addressing address $[h_{(n)}, a_n, a_{n-1}, ..., a_{n-L+1}, j]$ is divided into two or more addressing addresses by including the same $h_{(n)}$ and $j$ in the two or more addressing addresses and dividing a sequence $\{a_n, a_{n-1}, ..., a_{n-L+1}\}$ into two or more segments to be respectively included in the two or more addressing addresses.

A CPM modulation digitization module based on a table lookup method is provided, which includes: a pulse generator, a delayer, a selector, a first accumulator, an adder, an addressing unit and a trigonometric function storage.

The pulse generator is configured to generate a symbol pulse under control of a sampling clock, as a control signal of the delayer and the first accumulator.

The delayer is configured to: delay a current input symbol $a_n$ under control of the symbol pulse generated by the pulse generator, to obtain $(L+1)$ continuous symbols $a_n, a_{n-1}, ..., a_{n-L+1}, a_{n-L}$; and output the first $L$ continuous symbols $a_n, a_{n-1}, ..., a_{n-L+1}$ to the addressing unit, and output the last symbol $a_{n-L}$ to the selector.

The addressing unit is configured to: establish a phase table according to a mathematical expression of a CPM baseband modulated signal, where the phase table includes an addressing address and a relative phase corresponding to the addressing address; receive the $L$ continuous symbols $a_n, a_{n-1}, ..., a_{n-L+1}$ outputted by the delayer, and address the established phase table using an addressing address $[h_{(n)}, a_n, a_{n-1}, ..., a_{n-L+1}, d]$ formed by the $L$ continuous symbols $a_n, a_{n-1}, ..., a_{n-L+1}$, a modulation index $h_{(n)}$ corresponding to the symbol $a_n$ and a current sampling time d, to obtain a relative phase $\phi_n(t)$; and output the relative phase $\phi_n(t)$ to the adder.

The selector is configured to: receive the symbol $a_{n-L}$ outputted by the delayer; calculate an accumulative phase increment $\delta$ based on the symbol $a_{n-L}$ and a modulation index $h_{(n-L)}$ corresponding to the symbol $a_{n-L}$ according to an equation $\delta = \pi h_{(n-L)} a_{n-L}$; and output the accumulative phase increment $\delta$ to the first accumulator.

The first accumulator is configured to: receive the accumulative phase increment $\delta$ outputted by the selector; add the accumulative phase increment $\delta$ to an accumulative phase $\theta_{n-L-1}$ at the end of a period of a previous symbol

$a_{n-L-1}$ under control of the symbol pulse generated by the pulse generator, to obtain an accumulative phase $\theta_{n-L}$ at the end of a period of the symbol $a_{n-L}$; and output the accumulative phase $\theta_{n-L}$ to the adder.

The adder is configured to: receive the relative phase $\phi_n(t)$ outputted by the addressing unit and the accumulative phase $\theta_{n-L}$ outputted by the first accumulator; add $\phi_n(t)$ to $\theta_{n-L}$, to obtain a phase $\varphi(t)$ of the CPM baseband modulated signal; and output the phase $\varphi_n(t)$ to the trigonometric function storage.

The trigonometric function storage is configured to receive the phase $\varphi_n(t)$ outputted by the adder, and look up a sine table and a cosine table to obtain orthogonal signals $\cos\varphi_n(t)$ and $\sin\varphi_n(t)$, to complete CPM baseband modulation.

In the CPM modulation digitization module based on the table lookup method described above, the addressing unit establishes the phase table according to the mathematical expression of the CPM baseband modulated signal by: obtaining a discrete expression of the relative phase $\phi_n(t)$ in the mathematical expression of the CPM baseband modulated

signal as $\phi_n(j) = 2\pi \sum\limits_{i=n-L+1}^{n} a_i h_{(i)} q_{n-i}(j)$, $j = 0,1,...,2^N - 1$; obtaining a relative phase value $\phi_n(j)$ corresponding to

a combination $[h_{(n)},a_n,a_{n-1},...,a_{n-L+1},j]$ according to the discrete expression of $\phi_n(t)$; and establishing the phase table by taking $[h_{(n)},a_n,a_{n-1},...,a_{n-L+1},j]$ as the addressing address and taking $\phi_n(j)$ as the relative phase value corresponding to the addressing address, where $a_i$ denotes an $i$-th $M$-ary symbol, $a_i \in \{\pm 1,...,\pm(M-1)\}$, $h_{(i)}$ denotes a modulation index corresponding to the $i$-th symbol $a_i$, a value of $h_{(i)}$ comes from an index set $\{h_0,h_1,...,h_{R-1}\}$ periodically with a period $R$, a subscript $(i)$ denotes $i$ modulo $R$, $q_{n-i}(j)$ is a discrete expression of a phase pulse function $q(t)$, $L$ is a correlation length, and $j$ is a sequence number of a sampling point.

In the CPM modulation digitization module based on the table lookup method described above, the obtaining the discrete expression of the relative phase $\phi_n(t)$ in the mathematical expression of the CPM baseband modulated signal includes step (1) to step (2).

In step (1), the mathematical expression $s(t) = \sqrt{\dfrac{2E}{T}} \exp\{-j\varphi(t)\}$ of the CPM baseband modulated signal is obtained, where $E$ is symbol energy, $T$ is a symbol period, and $\varphi(t)$ is a phase of the modulated signal and is represented as:

$$\varphi(t) = \pi \sum_{i=0}^{n-L} a_i h_{(i)} + 2\pi \sum_{i=n-L+1}^{n} a_i h_{(i)} q(t-iT), \qquad nT \le t < (n+1)T$$

It is assumed that $\theta_{n-L} = \pi \sum\limits_{i=0}^{n-L} a_i h_{(i)}$ and $\phi_n(t) = 2\pi \sum\limits_{i=n-L+1}^{n} a_i h_{(i)} q(t-iT)$, where $\theta_{n-L}$ denotes an

accumulative phase, $\phi_n(t)$ denotes a relative phase, t denotes time, $q(t)$ is a phase pulse function and is represented as:

$$q(t) = \begin{cases} 0, & t \le 0 \\ \int_0^t g(\tau)d\tau, & 0 < t \le LT \\ 1/2, & t > LT \end{cases}$$

where $g(t)$ is a frequency pulse function.

In step (2), the final discrete expression of the relative phase $\phi_n(t)$ is determined by steps (a) to (c).

In step (a), $q(t)$ is discretized in an interval of $0 < t \le LT$, where assuming that there are $2^N$ sampling points in one symbol period, a discrete expression of $q(t)$ is represented as:

$$q_k(j) = q(t)\Big|_{t=kT+jT_s}$$
$$= q(kT + jT_s), \quad k = 0,1,...,L-1, j = 0,1,...,2^N - 1$$

where $T_s$ denotes a sampling period.

In step (b), $\phi_n(t)$ is discretized in the interval of $0 < t \leq LT$, according to an equation:

$$\phi_n(j) = \phi_n(t)\Big|_{t=nT+jT_s}$$

$$= 2\pi \sum_{i=n-L+1}^{n} a_i h_{(i)} q(nT + jT_s - iT)$$

$$= 2\pi \sum_{i=n-L+1}^{n} a_i h_{(i)} q\big((n-i)T + jT_s\big)$$

In step (c), an expression $q((n-i)T + jT_s) = q_{n-i}(j)$ is obtained from step (a), and the expression $q((n-i)T + jT_s) = q_{n-i}(j)$ is substituted into the equation in step (b), to obtain the following discrete expression of $\phi_n(t)$:

$$\phi_n(j) = 2\pi \sum_{i=n-L+1}^{n} a_i h_{(i)} q_{n-i}(j), \quad j = 0,1,\ldots,2^N - 1$$

In the CPM modulation digitization module based on the table lookup method, the pulse generator includes a second accumulator and a decision device. The second accumulator continuously accumulates a symbol frequency control word K under control of the sampling clock, and the decision device outputs a symbol pulse when the second accumulator overflows. The second accumulator is a $Q$-bit accumulator, where $K = 2^Q \cdot \dfrac{T_s}{T}$, $T_s$ and $T$ are a sampling period and a symbol period, respectively.

In the CPM modulation digitization module based on the table lookup method, upper $N$ bits of a result outputted by the second accumulator are taken as the current sampling time $d$.

In the CPM modulation digitization module based on the table lookup method described above, in a case that one phase table used in the addressing unit is insufficient to contain information on the relative phase of the CPM baseband modulated signal, the relative phase $\phi_n(j)$ may be divided into two or more terms a sum of which is the relative phase $\phi_n(j)$, and two or more phase tables are established. When performing the CPM baseband modulation, the two or more phase tables are addressed based on the addressing address, and address results are added together to obtain a relative phase $\phi_n(t)$ of the CPM baseband modulated signal.

In the CPM modulation digitization module based on the table lookup method described above, the relative phase $\phi_n(j)$ is divided into two or more terms a sum of which is the relative phase $\phi_n(j)$, and the addressing address $[h_{(n)}, a_n, a_{n-1}, \ldots, a_{n-L+1}, j]$ is divided into two or more addressing addresses. The addressing address $[h_{(n)}, a_n, a_{n-1}, \ldots, a_{n-L+1}, j]$ is divided by including the same $h_{(n)}$ and j in the two or more addressing addresses and dividing a sequence $\{a_n, a_{n-1}, \ldots, a_{n-L+1}\}$ into two or more segments to be respectively included in the two or more addressing addresses.

As compared with the conventional technology, the present disclosure has the following advantageous effects.

(1) In the present disclosure, the relative phase of the CPM modulated signal is stored in the phase table in advance, and the relative phase information may be obtained directly by looking up the phase table in a hardware implementation, thereby greatly reducing complexity of the hardware implementation and simplifying a modulation implementation flow by reasonably designing the addressing method.

(2) In the present disclosure, the phase information stored in the phase table is determined according to an accurate calculation equation for phase change information, such that an accurate phase at the end of a period of each symbol can be obtained, thereby facilitating coherent demodulation of a demodulation system.

(3) In the present disclosure, the size of the phase table may be adjusted as needed. In a case that one phase table is insufficient to contain information on the relative phase of the CPM baseband modulated signal, the relative phase may be divided into two or more terms a sum of which is the relative phase $\phi_n(j)$, and two or more phase tables are established. Phase information stored in the two or more phase tables are based on the same sampling time and a continuous symbol sequence, thereby perfectly ensuring phase continuousness and effectively avoiding distortion of the modulated signal.

(4) The present disclosure is implemented in a digitized manner, and thus no analog device such as an oscillator (VCO) is required, thereby greatly reducing cost and volume of hardware, and improving reliability of the hardware.

(5) The method according to the present disclosure has a wide application scope, which is applicable to not only binary full-response CPM modulation having a single modulation index, but also CPM having multiple indexes, M-ary CPM modulation having a large correlation length, full-response CPM modulation (such as PCM/FM, and SOQPSK-MIL) and partial-response CPM modulation (such as SOQPSK-TG, and ARTM CPM).

**BRIEF DESCRIPTION OF THE DRAWINGS**

Figure 1 is a block diagram of a CPM baseband modulation digitization implementation according to the present disclosure;

Figure 2 is a schematic structural diagram of a pulse generator according to the present disclosure;

Figure 3 shows a frequency spectrum of a PCM/FM modulated signal according to a first embodiment of the present disclosure;

Figure 4 shows a frequency spectrum of an ARTM CPM modulated signal according to a second embodiment of the present disclosure; and

Figure 5 shows a frequency spectrum of an SOQPSK-TG modulated signal according to a third embodiment of the present disclosure.

**DETAILED DESCRIPTION OF THE EMBODIMENTS**

The embodiments of the present disclosure are further described in detail below in conjunction with the drawings.

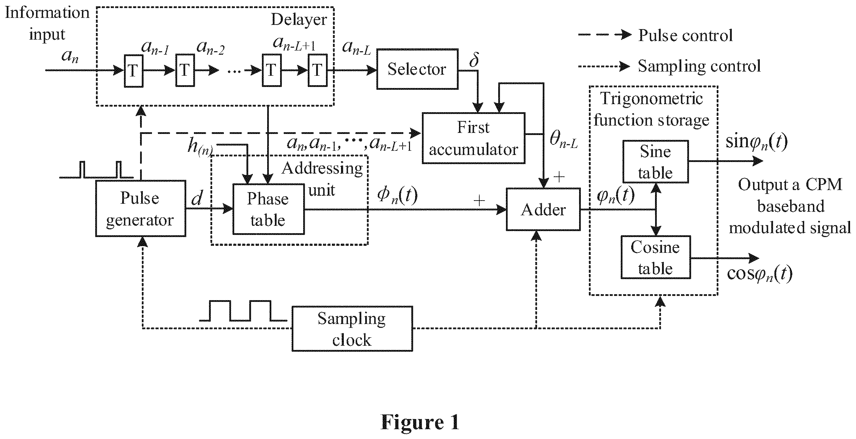

As shown in Figure 1 which is a block diagram of a CPM baseband modulation digitization implementation according to the present disclosure, a CPM modulation digitization implementation method according to the present disclosure is implemented by a CPM modulation digitization module. The CPM modulation digitization module includes a pulse generator, a delayer, a selector, a first accumulator, an adder, an addressing unit and a trigonometric function storage, functions of which are described below.

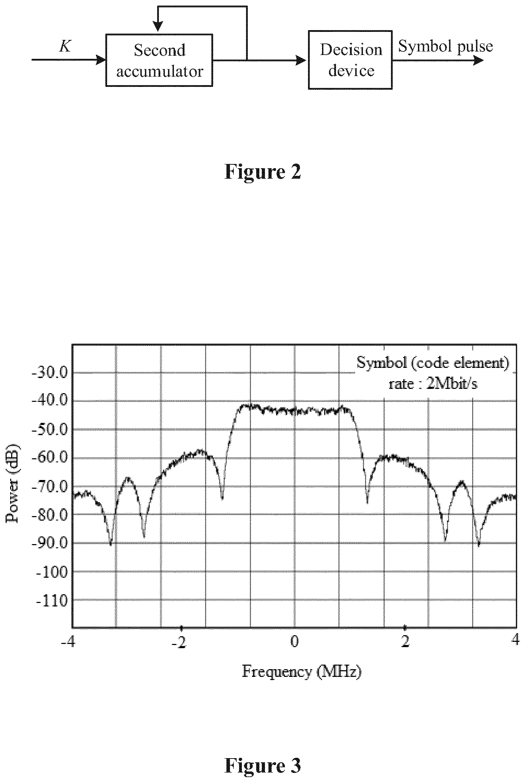

The pulse generator is configured to generate a symbol pulse under control of a sampling clock, as a control signal of the delayer and the first accumulator. As shown in Figure 2 which is a schematic structural diagram of the pulse generator according to the present disclosure, the pulse generator includes a second accumulator and a decision device. The second accumulator is a $Q$-bit accumulator, and has an initial value of 0. The second accumulator continuously accumulates a symbol frequency control word $K$ under control of the sampling clock, and the decision device outputs a symbol pulse when the second accumulator overflows. $K = 2^{Q} \cdot \dfrac{T_s}{T}$, where $T_s$ and $T$ are a sampling period and a symbol period, respectively. Upper $N$ bits of a result outputted from the second accumulator are taken as a current sampling time $d$.

The delayer is configured to: delay a current input symbol $a_n$ under control of the symbol pulse generated by the pulse generator, to obtain $(L+1)$ continuous symbols $a_n, a_{n-1}, ..., a_{n-L+1}, a_{n-L}$; and output the first $L$ continuous symbols $a_n, a_{n-1}, ..., a_{n-L+1}$ to the addressing unit, and output the last symbol $a_{n-L}$ to the selector.

The addressing unit is configured to: establish a phase table according to a mathematical expression of a CPM modulated signal, where the phase table includes an addressing address and a relative phase corresponding to the addressing address; receive the $L$ continuous symbols $a_n, a_{n-1}, ..., a_{n-L+1}$ outputted by the delayer, and address the established phase table using an addressing address $[h_{(n)}, a_n, a_{n-1}, ..., a_{n-L+1}, d]$ formed by the $L$ continuous symbols $a_n, a_{n-1}, ..., a_{n-L+1}$, a modulation index $h_{(n)}$ corresponding to the symbol $a_n$ and the current sampling time $d$, to obtain a relative phase $\phi_n(t)$; and output the relative phase $\phi_n(t)$ to the adder.

The selector is configured to receive the symbol $a_{n-L}$ outputted by the delayer, and calculate an accumulative phase increment $\delta$ based on the symbol $a_{n-L}$ and a modulation index $h_{(n-L)}$ corresponding to the symbol $a_{n-L}$ according to an equation $\delta = \pi h_{(n-L)} a_{n-L}$, and output the accumulative phase increment $\delta$ to the first accumulator.

The first accumulator is configured to: receive the accumulative phase increment $\delta$ outputted by the selector; add the accumulative phase increment $\delta$ to an accumulative phase $\theta_{n-L-1}$ at the end of a period of a previous symbol $a_{n-L-1}$ under control of the symbol pulse generated by the pulse generator, to obtain an accumulative phase $\theta_{n-L}$ at the end of a period of the symbol $a_{n-L}$; and output the accumulative phase $\theta_{n-L}$ to the adder. An initial value of the first accumulator is 0.

The adder is configured to: receive the relative phase $\phi_n(t)$ outputted by the addressing unit and the accumulative phase $\theta_{n-L}$ outputted by the first accumulator; add $\phi_n(t)$ to $\theta_{n-L}$ to obtain a phase $\varphi_n(t)$ of the CPM baseband modulated signal; and output the phase $\varphi_n(t)$ to the trigonometric function storage.

The trigonometric function storage is configured to receive the phase $\varphi_n(t)$ outputted by the adder, look up a sine table and a cosine table to obtain orthogonal signals $\cos\varphi_n(t)$ and $\sin\varphi_n(t)$, to complete CPM baseband modulation.

A CPM modulation digitization implementation method based on a table lookup method is provided according to the present disclosure, which includes steps 1 to 7.

In step 1, the addressing unit establishes a phase table according to a mathematical expression of a CPM modulated signal. The phase table includes an addressing address and a relative phase corresponding to the addressing address.

The addressing unit establishes the phase table according to the mathematical expression of the CPM modulated signal by step (1) to step (3).

In step (1), the mathematical expression $s(t) = \sqrt{\dfrac{2E}{T}}\exp\left\{-j\varphi(t)\right\}$ of the CPM baseband modulated signal is obtained, where E is symbol energy, T is a symbol period, and $\varphi(t)$ is a phase of the modulated signal and is represented as:

$$\varphi(t) = \pi\sum_{i=0}^{n-L} a_i h_{(i)} + 2\pi\sum_{i=n-L+1}^{n} a_i h_{(i)} q(t - iT), \qquad nT \le t < (n+1)T$$

It is assumed that $\theta_{n-L} = \pi\sum_{i=0}^{n-L} a_i h_{(i)}$ and $\phi_n(t) = 2\pi\sum_{i=n-L+1}^{n} a_i h_{(i)} q(t - iT)$, where $\theta_{n-L}$ denotes an accumulative phase, $\phi_n(t)$ denotes a relative phase, $t$ denotes time, $a_i$ denotes an $i$-th $M$-ary symbol, $a_i \in \{\pm 1,...,\pm(M-1)\}$, $M$ is a positive integer, $h_{(i)}$ denotes a modulation index corresponding to the $i$-th symbol $a_i$, a value of $h_{(i)}$ comes from an index set $\{h_0, h_1,..., h_{R-1}\}$ periodically with a period $R$, a subscript $(i)$ denotes $i$ modulo $R$, $R$ is a positive integer, and $L$ is a correlation length.

$q(t)$ is a phase pulse function and is represented as

$$q(t) = \begin{cases} 0, & t \le 0 \\ \int_0^t g(\tau)d\tau, & 0 < t \le LT \\ 1/2, & t > LT \end{cases}$$

where $g(t)$ is a frequency pulse function, and $q(t)$ is an integral of $g(t)$.

In step (2), a final discrete expression of the relative phase $\phi_n(t)$ is determined by steps (a) to (c).

In step (a), $q(t)$ is discretized in an interval of $0 < t \le LT$. Assuming that there are $2^N$ sampling points in one symbol period, a discrete expression of $q(t)$ is represented as:

$$q_k(j) = q(t)\Big|_{t=kT+jT_s}$$
$$= q\left(kT + jT_s\right), \quad k = 0,1,...,L-1, j = 0,1,...,2^N - 1$$

where $T_s$ denotes a sampling period, and $j$ is a sequence number and denotes a $j$-th sampling point.

In step (b), $\phi_n(t)$ is discretized in the interval of $0 < t \le LT$, according to an equation:

$$\phi_n(j) = \phi_n(t)\Big|_{t=nT+jT_s}$$

$$= 2\pi \sum_{i=n-L+1}^{n} a_i h_{(i)} q(nT + jT_s - iT)$$

$$= 2\pi \sum_{i=n-L+1}^{n} a_i h_{(i)} q\big((n-i)T + jT_s\big)$$

In step (c), an expression $q((n-i)T + jT_s) = q_{n-i}(j)$ is obtained from step (a), and the expression $q((n-i)T + jT_s) = q_{n-i}(j)$ is substituted into the equation in step (b), to obtain the final discrete expression of $\phi_n(t)$:

$$\phi_n(j) = 2\pi \sum_{i=n-L+1}^{n} a_i h_{(i)} q_{n-i}(j), \quad j = 0,1,\dots,2^N - 1$$

In step (3), a relative phase value $\phi_n(j)$ corresponding to a combination $[h_{(n)},a_n,a_{n-1},\dots,a_{n-L+1}, j]$ is obtained according to the final discrete expression of $\phi_n(t)$, and a phase table is established by taking $[h_{(n)},a_n,a_{n-1},\dots a_{n-L+1}, j]$ as the addressing address and taking $\phi_n(j)$ as the relative phase corresponding to the addressing address.

In step 2, a symbol pulse is generated by the pulse generator under control of a sampling clock. A period of the symbol pulse is $T$. The delayer delays a current input symbol $a_n$ under control of the symbol pulse to obtain $(L+1)$ continuous symbols $a_n,a_{n-1},\dots,a_{n-L+1},a_{n-L}$, and outputs the first $L$ continuous symbols $a_n,a_{n-1},\dots,a_{n-L+1}$ to the addressing unit, and outputs the last symbol $a_{n-L}$ to the selector.

In step 3, the addressing unit addresses the phase table established in step 1 using an addressing address $[h_{(n)},a_n,a_{n-1},\dots,a_{n-L+1}, d]$ formed by a modulation index $h_{(n)}$ corresponding to the current symbol $a_n$, the $L$ continuous symbols $a_n,a_{n-1},\dots,a_{n-L+1}$ and a current sampling time $d$, to obtain a relative phase $\phi_n(t)$, and outputs the relative phase $\phi_n(t)$ to the adder.

In step 4, the selector calculates an accumulative phase increment $\delta$ based on the symbol $a_{n-L}$ and a modulation index $h_{(n-L)}$ corresponding to the symbol $a_{n-L}$ according to an equation $\delta = \pi h_{(n-L)}a_{n-L}$, and outputs the phase increment $\delta$ to the first accumulator.

In step 5, the first accumulator adds the accumulative phase increment $\delta$ to an accumulative phase $\theta_{n-L-1}$ at the end of a period of a previous symbol $a_{n-L-1}$ under control of the symbol pulse, to obtain an accumulative phase $\theta_{n-L}$ at the end of a period of the symbol $a_{n-L}$, and outputs the accumulative phase $\theta_{n-L}$ to the adder.

In step 6, the adder adds the received relative phase $\phi_n(t)$ to the accumulative phase $\theta_{n-L}$ to obtain a phase $\varphi_n(t)$ of the CPM baseband modulated signal, and outputs the phase $\varphi_n(t)$ to the trigonometric function storage.

In step 7, the trigonometric function storage looks up a sine table and a cosine table using the phase $\varphi_n(t)$, to obtain orthogonal signals $\cos\varphi_n(t)$ and $\sin\varphi_n(t)$, to complete CPM baseband modulation.

In the present disclosure, in a case that one phase table used by the addressing unit is insufficient to contain information on the relative phase of the CPM baseband modulated signal, the relative phase $\phi_n(j)$ may be divided into two or more terms a sum of which is the relative phase $\phi_n(j)$, and two or more phase tables are established. When performing the CPM baseband modulation, the two or more phase tables are addressed using two or more addressing addresses, and address results are added together to obtain a relative phase $\phi_n(t)$ of the CPM baseband modulated signal.

In a case that the relative phase $\phi_n(j)$ is divided into two or more terms, a sum of which is the relative phase $\phi_n(j)$ to establish phase tables, the addressing address $[h_{(n)},a_n,a_{n-1},\dots,a_{n-L+1}, j]$ is divided into two or more addressing addresses. The addressing address $[h_{(n)},a_n,a_{n-1},\dots,a_{n-L+1}, j]$ is divided by including the same $h_{(n)}$, and j in the two or more addressing addresses and dividing a sequence $\{a_n,a_{n-1},\dots,a_{n-L+1}\}$ into two or more segments to be respectively included in the addressing addresses. For example, in a case that $[h_{(n)},a_n,a_{n-1},\dots,a_{n-L+1}, j]$ is divided into two addressing addresses, the addressing addresses may be represented as $[h_{(n)},a_n,a_{n-1},\dots,a_{n+1}, j]$ and $[h_{(n)},a_{n-l-1},a_{n-l-2},\dots,a_{n-L+1}, j]$, where $l$ is a positive integer less than $L$. When performing CPM baseband modulation, the established phase tables described above are addressed using two addressing addresses, and two address results are added together to obtain the relative phase $\phi_n(t)$.

First Embodiment

For a PCM/FM modulation mechanism in which $M=2$, $L=1$, $R=1$, a single modulation index is used and $h=0.7$, a phase expression of a baseband signal is represented as:

$$\varphi(t) = \pi h \sum_{i=0}^{n-1} a_i + 2\pi h a_n q(t - nT)$$

where $a_i \in \{\pm 1\}$, an expression of a phase pulse function $q(t)$ and an expression of a frequency pulse function $g(t)$ are represented as:

$$q(t) = \begin{cases} 0, & t \le 0 \\ \int_0^t g(\tau)d\tau, & 0 < t \le T \\ 1/2, & t > T \end{cases} \qquad g(t) = \begin{cases} 0, & t \le 0, t > T \\ \dfrac{1}{2T}, & 0 < t \le T \end{cases}$$

The embodiment is implemented by steps (1) to (7).

In step (1), a relative phase of a PCM/FM modulated signal is calculated in advance. A discrete expression of the relative phase is represented as:

$$\phi_n(j) = 2\pi h a_n q(j), \quad j = 0, 1, ..., 2^N - 1$$

The relative phase is quantized with a quantization width of W. The quantized phase value is stored in a phase table in an addressing form of $[a_n, j]$. Since a single modulation index is used in PCM/FM, that is, $h_{(n)} = h = 0.7$, $h_{(n)}$ in the addressing address may be omitted. In the embodiment, $W=16$ and $N=7$, the number of combinations of $[a_n, j]$ is $M^L \cdot 2^N = 2 \cdot 2^7 = 256$, a depth of the phase table is $D=256$, and a width of the phase table is $W=16$. A part of correspondences between addresses and phases in the PCM/FM phase table is shown in Table 1 as follows. An address of 224 indicates that $a_n = 1$ and $j = (1100000)_2 = 96$.

Table 1 Part of Correspondences between Addresses and Phases in a PCM/FM Phase Table

| Address | Phase value |
|---------|-------------|
| 224 | 17203 |
| 225 | 17382 |
| 226 | 17562 |
| 227 | 17741 |
| 228 | 17920 |
| 229 | 18099 |
| 230 | 18278 |
| 231 | 18458 |
| 232 | 18637 |
| 233 | 18816 |
| 234 | 18995 |
| 235 | 19174 |
| 236 | 19354 |
| 237 | 19533 |
| 238 | 19712 |
| 239 | 19891 |
| 240 | 20070 |

In step (2), the 32-bit second accumulator continuously accumulates a symbol frequency control word K under control of the sampling clock. In the embodiment, a symbol period $T = \dfrac{1}{2 \times 10^6}$ S, and a sampling period $T_s = \dfrac{1}{100 \times 10^6}$ S, and the symbol frequency control word $K = 2^{32} \times \dfrac{T_s}{T} = 50 \times 2^{32}$. The decision device outputs a symbol pulse when the second accumulator overflows, and the delayer delays a current input symbol $a_n$ under control of the symbol pulse, to obtain a symbol $a_{n-1}$.

In step (3), a current sampling time $d$ is obtained from upper 7 bits of a result outputted by the second accumulator in step (2), and the phase table is addressed using an addressing address $[a_n,d]$ formed by the symbol $a_n$ and $d$, to obtain $\phi_n(t)$.

In step (4), the selector calculates an input $\delta$ of the first accumulator based on the symbol $a_{n-1}$ and the modulation index $h$.

$$\delta = \begin{cases} \pi h, & a_{n-1} = 1 \\ -\pi h, & a_{n-1} = -1 \end{cases}$$

In step (5), the first accumulator adds the phase increment $\delta$ obtained in step (4) to an accumulative phase $\theta_{n-2}$ at the end of a period of a symbol $a_{n-2}$ under control of the symbol pulse described in step (2), to obtain an accumulative phase $\theta_{n-1}$ at the end of a period of the symbol $a_{n-1}$.

In step (6), the adder adds $\phi_n(t)$ to $\theta_{n-1}$, to obtain $\varphi_n(t)$.

In step (7), a sine table and a cosine table are looked up using $\varphi_n(t)$, to obtain orthogonal signals $\cos\varphi_n(t)$ and $\sin\varphi_n(t)$, so as to complete PCM/FM baseband modulation.

Figure 3 shows a frequency spectrum of the PCM/FM modulated signal according to the first embodiment of the present disclosure.

Second Embodiment

For an ARTM CPM modulation mechanism in which $M = 4$, $L = 3$, $R = 2$ and $h \in \{4/16, 5/16\}$, a phase expression of a baseband signal is represented as:

$$\varphi(t) = \pi \sum_{i=0}^{n-3} a_i h_{(i)} + 2\pi \sum_{i=n-2}^{n} a_i h_{(i)} q(t - iT)$$

where $a_i \in \{\pm 1, \pm 3\}$, $h_{(i)}$ is equal to 4/16 or 5/16 alternately, and a subscript $(i)$ of $h_{(i)}$ denotes $i$ modulo 2. An expression of a phase pulse function $q(t)$ and an expression of a frequency pulse function $g(t)$ are represented as:

$$q(t) = \begin{cases} 0, & t \le 0 \\ \int_0^t g(\tau)d\tau, & 0 < t \le 3T \\ 1/2, & t > 3T \end{cases}$$

$$g(t) = \begin{cases} 0, & t \le 0, t > 3T \\ \dfrac{1}{6T}\left[1 - \cos(\dfrac{2\pi t}{3T})\right], & 0 < t \le 3T \end{cases}$$

The embodiment is implemented by steps (1) to (7).

In step (1), a relative phase of an ARTM CPM modulated signal is calculated in advance, and a discrete expression of the relative phase is represented as:

$$\phi_n(j) = 2\pi\left(h_{(n-2)}a_{n-2}q_2(j) + h_{(n-1)}a_{n-1}q_1(j) + h_{(n)}a_n q_0(j)\right), \quad j = 0,1,...,2^N - 1$$

The relative phase is quantized with a quantization width of $W$. The quantized phase value is stored in a phase table in an addressing form of $[h_{(n)},a_n,a_{n-1},a_{n-2}, j]$. In the embodiment, $W=16$ and $N=7$, the number of combinations of $[h_{(n)},a_n,a_{n-1},a_{n-2}, j]$ is $2\cdot M^L \cdot 2^N = 2 \cdot 4^3 \cdot 2^7 = 16384$, a depth of the phase table is $D=16384$, and a width of the phase table is $W=16$. A part of correspondences between addresses and phases in the ARTM CPM phase table is shown in Table 2 as follows. An address 10231 indicates that $h_{(n)} = 5/16$, $a_n = (00)_2 = -3$, $a_{n-1} = (11)_2 = 3$, $a_{n-2} = (11)_2 = 3$ and $j = (1110111)_2 = 119$.

Table 2 Part of Correspondences between Addresses and Phases in ARTM CPM Phase Table

| Address | Phase value |
|---|---|
| 10231 | 58663 |
| 10232 | 58876 |
| 10233 | 59089 |
| 10234 | 59303 |
| 10235 | 59517 |
| 10236 | 59731 |
| 10237 | 59946 |
| 10238 | 60162 |
| 10239 | 60377 |
| 10240 | 52493 |
| 10241 | 52357 |
| 10242 | 52220 |
| 10243 | 52083 |
| 10244 | 51945 |
| 10245 | 51806 |
| 10246 | 51667 |
| 10247 | 51528 |

In step (2), the 32-bit accumulator continuously accumulates a symbol frequency control word $K$ under control of a sampling clock. In the embodiment, a symbol period $T = \dfrac{1}{1 \times 10^6}\,\text{s}$, and a sampling period $T_s = \dfrac{1}{100 \times 10^6}\,\text{s}$, and the symbol frequency control word $K = 2^{32} \times \dfrac{T_s}{T} = 100 \times 2^{32}$. The decision device outputs a symbol pulse when the second accumulator overflows, and the delayer delays a current input symbol $a_n$ under control of the pulse, to obtain a symbol sequence $a_{n-1},a_{n-2},a_{n-3}$.

In step (3), upper 7 bits of a result outputted by the second accumulator in step (2) represent a current sampling time d, and the phase table is addressed using an addressing address $[h_{(n)},a_n,a_{n-1},a_{n-2}, d]$ formed by the modulation index $h_{(n)}$ corresponding to the current symbol $a_n$, the three continuous symbols $a_n,a_{n-1},a_{n-2}$ and the sampling time $d$, to obtain $\phi_n(t)$.

In step (4), the selector calculates an input $\delta$ of the first accumulator based on the symbol $a_{n-3}$ and a modulation index $h_{(n-3)}$ corresponding to the symbol $a_{n-3}$. A correspondence among $a_{n-3}$, $h_{(n-3)}$ and $\delta$ is shown in Table 3 as follows.

Table 3 Correspondence among $a_{n-3}$, $h_{(n-3)}$ and $\delta$ in ARTM CPM mechanism

| $h_{(n-3)}$ | $a_{n-3}$ | $\delta$ (before quantization) | $\delta$ (after quantization) |
|---|---|---|---|
| 4/16 | -3 | $-3/4\pi$ | 40960 |
| 4/16 | -1 | $-1/4\pi$ | 57344 |
| 4/16 | 1 | $1/4\pi$ | 8192 |
| 4/16 | 3 | $3/4\pi$ | 24576 |
| 5/16 | -3 | $-15/16\pi$ | 34816 |
| 5/16 | -1 | $-5/16\pi$ | 55296 |
| 5/16 | 1 | $5/16\pi$ | 10240 |
| 5/16 | 3 | $15/16\pi$ | 30720 |

In step (5), the first accumulator adds the phase increment $\delta$ obtained in step (4) to an accumulative phase $\theta_{n-4}$ at the end of a period of a symbol $a_{n-4}$ under control of the symbol pulse described in step (2), to obtain an accumulative phase $\theta_{n-3}$ at the end of a period of the symbol $a_{n-3}$.

In step (6), the adder adds $\phi_n(t)$ to $\theta_{n-3}$, to obtain $\varphi_n(t)$.

In step (7), a sine table and a cosine table are looked up using $\varphi_n(t)$, to obtain orthogonal signals $\cos\varphi_n(t)$ and $\sin\varphi_n(t)$, so as to complete ARTM CPM baseband modulation.

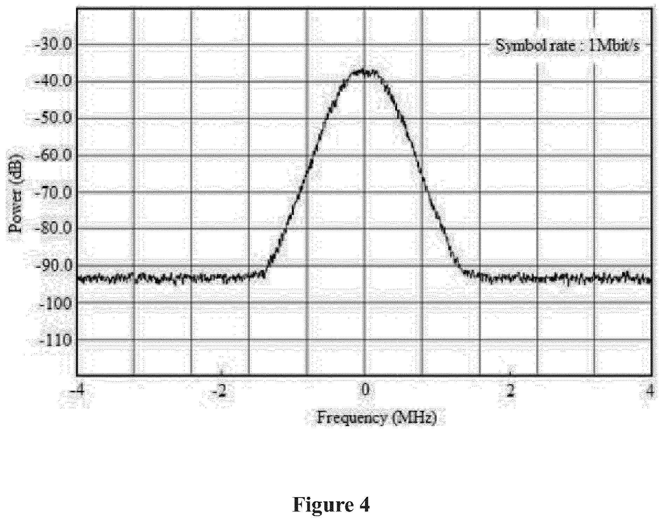

Figure 4 shows a frequency spectrum of the ARTM CPM modulated signal according to the second embodiment of the present disclosure.

Third Embodiment

For an SOQPSK-TG modulation mechanism in which $M = 3$, $L = 8$, $R = 1$, and a single modulation index is used and $h = 0.5$, a phase expression of a baseband signal is represented as:

$$\varphi(t) = \pi h \sum_{i=0}^{n-8} a_i + 2\pi h \sum_{i=n-7}^{n} a_i q(t - iT)$$

where $a_i \in \{\pm 1, 0\}$, which is obtain by pre-coding binary bit data $b_i$, and $b_i \in \{0, 1\}$. A correspondence between $\{b_n\}$ and $\{a_n\}$ is shown in Table 4 as follows.

Table 4 Correspondence between $\{b_n\}$ and $\{a_n\}$

| $b_n$ | $b_{n-1}$ | $b_{n-2}$ | $a_n$ | |
|---|---|---|---|---|
| | | | $n$ is an odd number | $n$ is an even number |
| 0 | 0 | 0 | 0 | 0 |
| 0 | 0 | 1 | 1 | -1 |
| 0 | 1 | 0 | 0 | 0 |
| 0 | 1 | 1 | -1 | 1 |
| 1 | 0 | 0 | -1 | 1 |
| 1 | 0 | 1 | 0 | 0 |
| 1 | 1 | 0 | 1 | -1 |
| 1 | 1 | 1 | 0 | 0 |

An expression of a phase pulse function $q(t)$ and an expression of a frequency pulse function $g(t)$ are represented as:

$$q(t) = \begin{cases} 0, & t \le 0 \\ \int_0^t g(\tau)d\tau, & 0 < t \le 8T \\ 1/2, & t > 8T \end{cases}$$

$$g(t) = n(t) \cdot w(t)$$

$$n(t) = \frac{A\cos(\pi\rho Bt/T)}{1 - 4(\pi\rho Bt/T)^2} \cdot \frac{\sin(\pi Bt/T)}{\pi Bt/T}$$

$$w(t) = \begin{cases} 1, & |t/T| \le T_1 \\ \dfrac{1}{2} + \dfrac{1}{2}\cos\dfrac{\pi(|t/T| - T_1)}{T_2}, & T_1 < |t/T| \le T_1 + T_2 \\ 0, & |t/T| > T_1 + T_2 \end{cases}$$

where $n(t)$ is a modified raised cosine function, $A$ in the expression is a normalized coefficient, $\rho$ is a roll-off factor, $B$ is a time proportion factor, $w(t)$ is a time-domain window function and is used to limit a duration of $g(t)$. $T$ is a symbol period, $T_1$ and $T_2$ are two time-related parameters of the time-domain window function. Values of four parameters ($\rho,B,T_1,T_2$) are $\rho$=0.70, $B$=1.25, $T_1$=1.5, $T_2$=0.5.

The embodiment is implemented by steps (1) to (7).

In step (1), a relative phase of an SOQPSK-TG modulated signal is calculated in advance. A discrete expression of the relative phase is represented as:

$$\phi_n(j) = 2\pi h \sum_{i=n-7}^{n} a_i q_{n-i}(j)$$

$\phi_n(j)$ is divided into $\phi_{In}(j)$ and $\phi_{IIn}(j)$, as shown below.

$$\phi_n(j) = \phi_{In}(j) + \phi_{IIn}(j), \quad j = 0,1,\dots,2^N - 1$$

$$\phi_{In}(j) = 2\pi h \sum_{i=n-3}^{n} a_i q_{n-i}(j), \quad j = 0,1,\dots,2^N - 1$$

$$\phi_{IIn}(j) = 2\pi h \sum_{i=n-7}^{n-4} a_i q_{n-i}(j), \quad j = 0,1,\dots,2^N - 1$$

For facilitating address coding, the symbol $a_i$ is represented with two bits. Therefore, each symbol may have four values, one of which is invalid. In the embodiment, it is set that "0", "1" and "-1" are represented as 00, 01 and 10 respectively, and 11 is an invalid value. In this case, the number of combinations of [$a_n,a_{n-1},a_{n-2},a_{n-3}, J$] is $M'^{L/2} \cdot 2^N = 4^{8/2} \cdot 2^N = 256 \cdot 2^N$, and a phase value corresponding to an invalid combination is set to be 0. Similarly, the number of combinations of $a_{n-4},a_{n-5},a_{n-6},a_{n-7}, J$] is also $256 \cdot 2^N$. Since a single modulation index is used in the SOQPSK-TG, that is, $h_{(n)} = h = 0.5$, $h_{(n)}$ may be omitted in the addressing address. $\phi_{In}(j)$ and $\phi_{IIn}(j)$ are quantized respectively, the number of quantization bits being $W$. The quantized $\phi_{In}(j)$ and $\phi_{IIn}(j)$ are stored in a phase table I and a phase table II in addressing

forms of $[a_n,a_{n-1},a_{n-2},a_{n-3},j]$ and $[a_{n-4},a_{n-5},a_{n-6},a_{n-7},j]$, respectively. In the embodiment, $W=16$ and $N=5$. Thus each of the phase table I and the phase table II has a depth $D=256 \cdot 2^6 = 16384$ , and a width $W=16$. A part of correspondences between addresses and phases in the SOQPSK-TG phase table is shown in Table 5 below. An address 15432 in the phase table I indicates that $a_n = (11)_2$, $a_{n-1} = (11)_2$ , $a_{n-2} = (00)_2 = 0$, $a_{n-3} = (00)_2 = 0$ , and $j = (111111)_2 = 63$, which corresponds to an invalid phase value. An address 2625 in phase table II indicates that $a_{n-4} = (00)_2 = 0$, $a_{n-5} = (10)_2 = -1$, $a_{n-6} = (10)_2 = -1$, $a_{n-7} = (01)_2 = 1$, and $j = (000001)_2 = 1$.

Table 5 Part of Correspondences between Addresses and Phases in SOQPSK-TG Phase Table

| Phase Table I | | Phase Table II | |
|---|---|---|---|
| Address | Phase value | Address | Phase value |
| 15423 | 0 | 2625 | 48914 |
| 15424 | 364 | 2626 | 48868 |
| 15425 | 429 | 2627 | 48825 |
| 15426 | 495 | 2628 | 48783 |
| 15427 | 564 | 2629 | 48744 |
| 15428 | 635 | 2630 | 48707 |
| 15429 | 708 | 2631 | 48672 |
| 15430 | 784 | 2632 | 48639 |
| 15431 | 861 | 2633 | 48608 |
| 15432 | 941 | 2634 | 48578 |
| 15433 | 1023 | 2635 | 48551 |
| 15434 | 1107 | 2636 | 48526 |
| 15435 | 1194 | 2637 | 48502 |
| 15436 | 1282 | 2638 | 48480 |
| 15437 | 1373 | 2639 | 48459 |
| 15438 | 1466 | 2640 | 48441 |

In step (2), the 32-bit second accumulator continuously accumulates a symbol frequency control word K under control of the sampling clock. In the embodiment, a symbol period $T = \dfrac{1}{2 \times 10^6}\,\mathrm{s}$ , a sampling period $T_s = \dfrac{1}{100 \times 10^6}\,\mathrm{s}$ , and the symbol frequency control word $K = 2^{32} \times \dfrac{T_s}{T} = 50 \times 2^{32}$ . The decision device outputs a symbol pulse when the second accumulator overflows, and the delayer delays an inputted $a_n$ under control of the pulse, to obtain $a_{n-1},a_{n-2},...,a_{n-8}$.

In step (3), upper 5 bits of a result outputted by the second accumulator in step (2) represent a current sampling time d, and phase table I and phase table II are respectively addressed using addressing addresses $[a_n,a_{n-1},a_{n-2},a_{n-3},d]$ and $[a_{n-4},a_{n-5},a_{n-6},a_{n-7},d]$ formed by the eight continuous symbols $a_n,a_{n-1},...,a_{n-7}$ and the current sampling time d, to obtain $\phi_{In}(t)$ and $\phi_{IIn}(t)$. The relative phase $\phi_n(t)$ is obtained by adding $\phi_{In}(t)$ and $\phi_{IIn}(t)$ together.

In step (4), the selector calculates an input $\delta$ of the first accumulator based on the symbol $a_{n-8}$ and the modulation index.

$$\delta = \begin{cases} \pi h, & a_{n-8} = 1 \\ 0, & a_{n-8} = 0 \\ -\pi h, & a_{n-8} = -1 \end{cases}$$

In step (5), the first accumulator adds $\delta$ obtained in step (4) to an accumulative phase $\theta_{n-9}$ at the end of a period of a symbol $a_{n-9}$ under control of the symbol pulse described in step (2), to obtain an accumulative phase $\theta_{n-8}$ at the end of a period of the symbol $a_{n-8}$.

In step (6), the adder adds $\phi_n(t)$ to $\theta_{n-8}$, to obtain $\varphi_n(t)$.

In step (7), a sine table and a cosine table are looked up using $\varphi_n(t)$, to obtain orthogonal signals $\cos\varphi_n(t)$ and $\sin\varphi_n(t)$, so as to complete SOQPSK-TG baseband modulation.

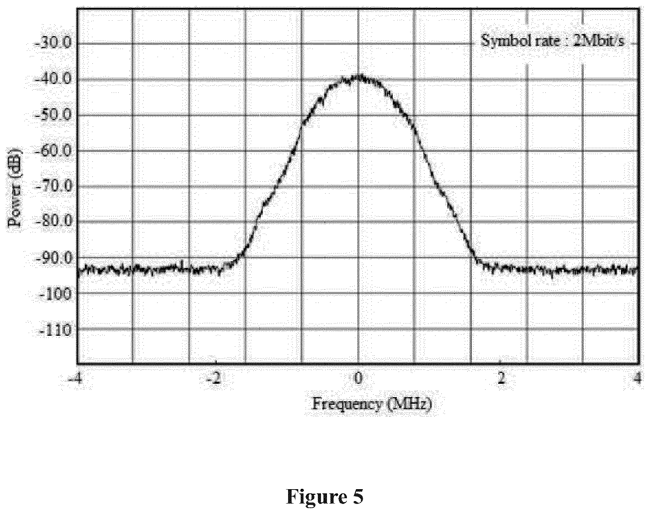

Figure 5 shows a frequency spectrum of the SOQPSK-TG modulated signal according to the third embodiment of the present disclosure.

The method according to the present disclosure has a simple implementation, a low complexity and a wide application scope, which is applicable to not only a binary full-response CPM modulation having a single modulation index, but also CPM having multiple indexes and *M*-ary CPM modulation having a large correlation length. The established phase table is associated with a sampling time, thereby ensuring phase continuousness of CPM modulation, having high implementation accuracy and facilitating coherent demodulation of a receiver.

Only the preferred embodiments of the present disclosure are described above, while the protection scope of the present disclosure is limited by the appended claims.

Content not described in detail in the specification of the present disclosure belongs to common knowledge of those skilled in the art.

**Claims**

1. A CPM modulation digitization implementation method based on a table lookup method, comprising:

    step (1), establishing a phase table according to a mathematical expression of a CPM baseband modulated signal, wherein the phase table comprises an addressing address and a relative phase corresponding to the addressing address;

    step (2), generating a symbol pulse under control of a sampling clock, and delaying a current input symbol $a_n$ under control of the symbol pulse, to obtain (L+1) continuous symbols $a_n, a_{n-1}, ..., a_{n-L+1}, a_{n-L}$;

    step (3), addressing the phase table established in the step (1) using an addressing address $[h_{(n)}, a_n, a_{n-1}, ..., a_{n-L+1}, d]$ formed by a modulation index $h_{(n)}$ corresponding to the current symbol $a_n$, L continuous symbols $a_n, a_{n-1}, ..., a_{n-L+1}$ and a current sampling time $d$, to obtain a relative phase $\phi_n(t)$;

    step (4), calculating an accumulative phase increment $\delta$ based on the symbol $a_{n-L}$ and a modulation index $h_{(n-L)}$ corresponding to the symbol $a_{n-L}$ according to an equation $\delta = \pi h_{(n-L)} a_{n-L}$;

    step (5), adding the accumulative phase increment $\delta$ to an accumulative phase $\theta_{n-L-1}$ at the end of a period of a previous symbol $a_{n-L-1}$ under control of the symbol pulse generated in the step (2), to obtain an accumulative phase $\theta_{n-L}$ at the end of a period of the symbol $a_{n-L}$;

    step (6), adding the relative phase $\phi_n(t)$ obtained in the step (3) to the accumulative phase $\theta_{n-L}$ obtained in the step (5), to obtain a phase $\varphi_n(t)$ of the CPM baseband modulated signal; and

    step (7), looking up a sine table and a cosine table using the phase $\varphi_n(t)$, to obtain orthogonal signals $\cos\varphi_n(t)$ and $\sin\varphi_n(t)$, to complete CPM baseband modulation.

2. The CPM modulation digitization implementation method based on the table lookup method according to claim 1, wherein the step (1) of establishing the phase table according to the mathematical expression of the CPM baseband modulated signal comprises:

    obtaining a discrete expression of the relative phase $\phi_n(t)$ in the mathematical expression of the CPM baseband modulated signal as

    $$\phi_n(j) = 2\pi \sum_{i=n-L+1}^{n} a_i h_{(i)} q_{n-i}(j), \quad j = 0, 1, ..., 2^N - 1;$$

    obtaining a relative phase value $\phi_n(j)$ corresponding to a combination $[h_{(n)}, a_n, a_{n-1}, ..., a_{n-L+1}, j]$ according to the discrete expression of $\phi_n(t)$ ; and

    establishing the phase table by taking $[h_{(n)}, a_n, a_{n-1}, ..., a_{n-L+1}, j]$ as the addressing address and taking $\phi_n(j)$ as the relative phase value corresponding to the addressing address, wherein $a_i$ denotes an $i$-th $M$-ary symbol, $a_i \in \{\pm 1, ..., \pm(M-1)\}$, $h_{(i)}$ denotes a modulation index corresponding to the $i$-th symbol $a_i$, a value of $h_{(i)}$ comes from an index set $\{h_0, h_1, ..., h_{R-1}\}$ periodically with a period $R$, a subscript (*i*) denotes *i* modulo *R*, $q_{n-i}(j)$ is a discrete expression of a phase pulse function $q(t)$, *L* is a correlation length, and *j* is a sequence number of a sampling point.

3. The CPM modulation digitization implementation method based on the table lookup method according to claim 2, wherein the obtaining the discrete expression of the relative phase $\phi_n(t)$ in the mathematical expression of the CPM baseband modulated signal comprises:

step (1), obtaining the mathematical expression $s(t) = \sqrt{\dfrac{2E}{T}} \exp\{-j\varphi(t)\}$ of the CPM baseband modulated signal, wherein *E* is symbol energy, *T* is a symbol period, $\varphi(t)$ is a phase of the modulated signal and is represented as:

$$\varphi(t) = \pi \sum_{i=0}^{n-L} a_i h_{(i)} + 2\pi \sum_{i=n-L+1}^{n} a_i h_{(i)} q(t - iT), \qquad nT \le t < (n+1)T$$

it is assumed that $\theta_{n-L} = \pi \sum_{i=0}^{n-L} a_i h_{(i)}$ and $\phi_n(t) = 2\pi \sum_{i=n-L+1}^{n} a_i h_{(i)} q(t - iT)$, wherein $\theta_{n-L}$ denotes an accumulative phase, $\phi_n(t)$ denotes a relative phase, *t* denotes time, $q(t)$ is a phase pulse function and is represented as:

$$q(t) = \begin{cases} 0, & t \le 0 \\ \int_0^t g(\tau)d\tau, & 0 < t \le LT \\ 1/2, & t > LT \end{cases}$$

wherein $g(t)$ is a frequency pulse function; and
step (2), determining the final discrete expression of the relative phase $\phi_n(t)$ by:

step (a), discretizing $q(t)$ in an interval of $0 < t \le LT$, where assuming that there are $2^N$ sampling points in one symbol period, a discrete expression of $q(t)$ is represented as:

$$q_k(j) = q(t)\Big|_{t=kT+jT_s}$$
$$= q(kT + jT_s), \quad k = 0,1,...,L-1, j = 0,1,...,2^N - 1$$

wherein $T_s$ denotes a sampling period;
step (b), discretizing $\phi_n(t)$ in the interval of $0 < t \le LT$ according to an equation:

$$\phi_n(j) = \phi_n(t)\Big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q((n-i)T + jT_s)$$

step (c), obtaining an expression $q((n-i)T + jT_s) = q_{n-i}(j)$ from the step (a), and substituting the expression

$q((n - i)T + jT_s) = q_{n-i}(j)$ into the equation in the step (b), to obtain the final discrete expression of $\phi_n(t)$ :

$$\phi_n(j) = 2\pi \sum_{i=n-L+1}^{n} a_i h_{(i)} q_{n-i}(j), \quad j = 0,1,...,2^N - 1$$

4. The CPM modulation digitization implementation method based on the table lookup method according to any one of claims 1 to 3, wherein in a case that one phase table is insufficient to contain information on the relative phase of the CPM baseband modulated signal, the method comprises:

dividing the relative phase $\phi_n(j)$ into two or more terms a sum of which is the relative phase $\phi_n(j)$, and establishing two or more phase tables, and
addressing when performing the CPM baseband modulation, the two or more phase tables based on the addressing address, and adding address results together to obtain the relative phase $\phi_n(t)$ of the CPM baseband modulated signal.

5. The CPM modulation digitization implementation method based on the table lookup method according to claim 4, when dividing the relative phase $\phi_n(j)$ into two or more terms a sum of which is the relative phase $\phi_n(j)$, further comprising:
dividing the addressing address $[h_{(n)},a_n,a_{n-1},...,a_{n-L+1},j]$ into two or more addressing addresses by comprising the same $h_{(n)}$ and j in the two or more addressing addresses and dividing a sequence $\{a_n,a_{n-1},...,a_{n-L+1}\}$ into two or more segments to be respectively comprised in the two or more addressing addresses.

6. A CPM digitization modulation module based on a table lookup method, comprising:

a pulse generator,
a delayer,
a selector,
a first accumulator,
an adder,
an addressing unit, and
a trigonometric function storage, wherein
the pulse generator is configured to generate a symbol pulse under control of a sampling clock, as a control signal of the delayer and the first accumulator;
the delayer is configured to: delay a current input symbol $a_n$ under control of the symbol pulse generated by the pulse generator, to obtain (L+1) continuous symbols $a_n,a_{n-1},...,a_{n-L+1},a_{n-L}$ ; and output the first L continuous symbols $a_n,a_{n-1},...,a_{n-L+1}$ into the addressing unit, and output the last symbol $a_{n-L}$ to the selector;
the addressing unit is configured to: establish a phase table according to a mathematical expression of a CPM baseband modulated signal, wherein the phase table comprises an addressing address and a relative phase corresponding to the addressing address; receive the L continuous symbols $a_n,a_{n-1},...,a_{n-L+1}$ outputted by the delayer, and address the established phase table using an addressing address $[h_{(n)},a_n,a_{n-1},...,a_{n-L+1},d]$ formed by the L continuous symbols $a_n,a_{n-1},...,a_{n-L+1}$, a modulation index $h_{(n)}$ corresponding to the symbol $a_n$ and a current sampling time $d$, to obtain a relative phase $\phi_n(t)$; and output the relative phase $\phi_n(t)$ to the adder;
the selector is configured to receive the symbol $a_{n-L}$ outputted by the delayer, calculate an accumulative phase increment $\delta$ based on the symbol $a_{n-L}$ and a modulation index $h_{(n-L)}$ corresponding to the symbol $a_{n-L}$ according to an equation $\delta = \pi h_{(n-L)} a_{n-L}$, and output the accumulative phase increment $\delta$ to the first accumulator;
the first accumulator is configured to: receive the accumulative phase increment $\delta$ outputted by the selector; add the accumulative phase increment $\delta$ to an accumulative phase $\theta_{n-L-1}$ at the end of a period of a previous symbol $a_{n-L-1}$ under control of the symbol pulse generated by the pulse generator, to obtain an accumulative phase $\theta_{n-L}$ at the end of a period of the symbol $a_{n-L}$; and output the accumulative phase $\theta_{n-L}$ to the adder;
the adder is configured to: receive the relative phase $\phi_n(t)$ outputted by the addressing unit and the accumulative phase $\theta_{n-L}$ outputted by the first accumulator; add $\phi_n(t)$ to $\theta_{n-L}$, to obtain a phase $\varphi_n(t)$ of the CPM baseband modulated signal; and output the phase $\varphi_n(t)$ to the trigonometric function storage; and
the trigonometric function storage is configured to receive the phase $\varphi_n(t)$ outputted by the adder, and look up a sine table and a cosine table to obtain orthogonal signals $\cos\varphi_n(t)$ and $\sin\varphi_n(t)$, to complete CPM baseband modulation.

7. The CPM modulation digitization module based on the table lookup method according to claim 6, wherein the addressing unit is configured to establish the phase table according to the mathematical expression of the CPM baseband modulated signal by:

obtaining a discrete expression of the relative phase $\phi_n(t)$ in the mathematical expression of the CPM baseband modulated signal as

$$\phi_n(j) = 2\pi \sum_{i=n-L+1}^{n} a_i h_{(i)} q_{n-i}(j), \quad j = 0,1,\ldots,2^N - 1;$$

obtaining a relative phase value $\phi_n(j)$ corresponding to a combination $[h_{(n)},a_n,a_{n-1},\ldots,a_{n-L+1},j]$ according to the discrete expression of $\phi_n(t)$; and

establishing the phase table by taking $[h_{(n)},a_n,a_{n-1},\ldots,a_{n-L+1},j]$ as the addressing address and taking $\phi_n(j)$ as the relative phase value corresponding to the addressing address,

wherein $a_i$ denotes an *i*-th *M*-ary symbol, $a_i \in \{\pm 1,\ldots,\pm(M\text{-}1)\}$, $h_{(i)}$ denotes a modulation index corresponding to the *i*-th symbol $a_i$, a value of $h_{(i)}$ comes from an index set $\{h_0,h_1,\ldots,h_{R-1}\}$ periodically with a period $R$, a subscript $(i)$ denotes *i* modulo $R$, $q_{n-i}(j)$ is a discrete expression of a phase pulse function $q(t)$, $L$ is a correlation length, and $j$ is a sequence number of a sampling point.

8. The CPM modulation digitization module based on the table lookup method according to claim 7, wherein the obtaining the discrete expression of the relative phase $\phi_n(t)$ in the mathematical expression of the CPM baseband modulated signal comprises:

step (1), obtaining the mathematical expression $s(t) = \sqrt{\dfrac{2E}{T}} \exp\{-j\varphi(t)\}$ of the CPM baseband modulated signal, wherein $E$ is symbol energy, $T$ is a symbol period, $\phi_n(t)$ is a phase of the modulated signal and is represented as:

$$\varphi(t) = \pi \sum_{i=0}^{n-L} a_i h_{(i)} + 2\pi \sum_{i=n-L+1}^{n} a_i h_{(i)} q(t - iT), \qquad nT \le t < (n+1)T$$

it is assumed that $\theta_{n-L} = \pi \sum_{i=0}^{n-L} a_i h_{(i)}$ and $\phi_n(t) = 2\pi \sum_{i=n-L+1}^{n} a_i h_{(i)} q(t - iT)$, wherein $\theta_{n-L}$ denotes an accumulative phase, $\phi_n(t)$ denotes a relative phase, t denotes time, $q(t)$ is a phase pulse function and is represented as:

$$q(t) = \begin{cases} 0, & t \le 0 \\ \displaystyle\int_0^t g(\tau)d\tau, & 0 < t \le LT \\ 1/2, & t > LT \end{cases}$$

wherein $g(t)$ is a frequency pulse function; and

step (2), determining the final discrete expression of the relative phase $\phi_n(t)$ by:

step (a), discretizing $q(t)$ in an interval of $0 < t \le LT$, where assuming that there are $2^N$ sampling points in one symbol period, a discrete expression of $q(t)$ is represented as:

$$q_k(j) = q(t)\Big|_{t=kT+jT_s}$$

$$= q(kT + jT_s), \quad k = 0,1,...,L-1, j = 0,1,...,2^N-1$$

wherein $T_s$ denotes a sampling period;

step (b), discretizing $\phi_n(t)$ in the interval of $0 < t \le LT$, according to an equation:

$$\phi_n(j) = \phi_n(t)\Big|_{t=nT+jT_s}$$

$$= 2\pi \sum_{i=n-L+1}^{n} a_i h_{(i)} q(nT + jT_s - iT)$$

$$= 2\pi \sum_{i=n-L+1}^{n} a_i h_{(i)} q\big((n-i)T + jT_s\big)$$

step (c), obtaining an expression $q((n-i)T + jT_s) = q_{n-i}(j)$ from the step (a), and substituting the expression $q((n-i)T + jT_s) = q_{n-i}(j)$ into the equation in the step (b), to obtain the following discrete expression of $\phi_n(t)$ :

$$\phi_n(j) = 2\pi \sum_{i=n-L+1}^{n} a_i h_{(i)} q_{n-i}(j), \quad j = 0,1,...,2^N-1$$

9. The CPM modulation digitization module based on the table lookup method according to any one of claims 6 to 8, wherein
the pulse generator comprises a second accumulator and a decision device,
the second accumulator is configured to continuously accumulate a symbol frequency control word K under control of the sampling clock, and
the decision device is configured to output a symbol pulse when the second accumulator overflows,
the second accumulator is a $Q$-bit accumulator, and $K = 2^Q \cdot \dfrac{T_s}{T}$, $T_s$ is a sampling period and $T$ is a symbol period.

10. The CPM modulation digitization module based on the table lookup method according to claim 9, wherein upper N bits of a result outputted by the second accumulator is taken as the current sampling time $d$.

11. The CPM modulation digitization module based on the table lookup method according to any one of claims 6 to 8 and 10, wherein
in a case that one phase table used in the addressing unit is insufficient to contain information on the relative phase of the CPM baseband modulated signal, the relative phase $\phi_n(j)$ is divided into two or more terms a sum of which is the relative phase $\phi_n(j)$, and two or more phase tables are established, and
when performing the CPM baseband modulation, the two or more phase tables are addressed based on the addressing address, and address results are added together to obtain the relative phase $\phi_n(t)$ of the CPM baseband modulated signal.

12. The CPM modulation digitization module based on the table lookup method according to claim 11, wherein the relative phase $\phi_n(j)$ is divided into two or more terms a sum of which is the relative phase $\phi_n(j)$, and the addressing address $[h_{(n)}, a_n, a_{n-1},...,a_{n-L+1}j]$ is divided into two or more addressing addresses by comprising the same $h_{(n)}$ and $j$ in the two or more addressing addresses and dividing a sequence $\{a_n, a_{n-1},...,a_{n-L+1}\}$ into two or more segments to be respectively comprised in the two or more addressing addresses.

**Patentansprüche**

1. CPM-Modulation-Digitalisierungsumsetzungsverfahren, das auf einem Tabellennachschlageverfahren basiert, Folgendes umfassend:

   Schritt (1), Erstellen einer Phasentabelle gemäß einem mathematischen Ausdruck eines CPM-modulierten Basisbandsignals, wobei die Phasentabelle eine Adressieradresse und eine relative Phase umfasst, die der Adressieradresse entspricht,

   Schritt (2), Erzeugen eines Symbolimpulses unter Steuerung eines Abtasttakts und Verzögern eines aktuellen Eingangssymbols $a_n$ unter Steuerung des Symbolimpulses, um ($L$+1) kontinuierliche Symbole $a_n$, $a_{n-1}$, ..., $a_{n-L+1}$, $a_{n-L}$ zu erzielen,

   Schritt (3), Adressieren der in Schritt (1) erstellten Phasentabelle unter Verwendung einer Adressieradresse $[h_{(n)}, a_n, a_{n-1}, ..., a_{n-L+1}, d]$, die durch einen Modulationsindex $h_{(n)}$ entsprechend dem aktuellen Symbol $a_n$, $L$ kontinuierlichen Symbolen $a_n$, $a_{n-1}$, ..., $a_{n-L+1}$ und einer aktuellen Abtastzeit $d$ gebildet wird, um eine relative Phase $\varphi_n(t)$ zu erzielen,

   Schritt (4), Berechnen eines kumulativen Phasenzuwachses $\delta$ basierend auf dem Symbol $a_{n-L}$ und einem Modulationsindex $h_{(n-L)}$ entsprechend dem Symbol $a_{n-L}$ gemäß einer Gleichung $\delta = \pi h_{(n-L)} a_{(n-L)}$,

   Schritt (5), Addieren des kumulativen Phasenzuwachses $\delta$ zu einer kumulativen Phase $\theta_{n-L-1}$ am Ende einer Periode eines vorherigen Symbols $a_{n-L-1}$ unter Steuerung des in Schritt (2) erzeugten Symbolimpulses, um am Ende einer Periode des Symbols $a_{n-L}$ eine kumulative Phase $\theta_{n-L}$ zu erzielen,

   Schritt (6), Addieren der in Schritt (3) erzielten relativen Phase $\varphi_n(t)$ zur in Schritt (5) erzielten kumulativen Phase $\theta_{n-L}$, um eine Phase $\varphi_n(t)$ des CPM-modulierten Basisbandsignals zu erzielen, und

   Schritt (7) Nachschlagen in einer Sinustabelle und einer Cosinustabelle unter Verwendung der Phase $\varphi_n(t)$, um orthogonale Signale $\cos\varphi_n(t)$ und $\sin\varphi_n(t)$ zu erzielen, um die CPM-Basisbandmodulation abzuschließen.

2. CPM-Modulation-Digitalisierungsumsetzungsverfahren, das auf einem Tabellennachschlageverfahren basiert, nach Anspruch 1, wobei der Schritt (1) des Erstellens der Phasentabelle gemäß dem mathematischen Ausdruck des CPM-modulierten Basisbandsignals Folgendes umfasst:

   Erzielen eines diskreten Ausdrucks der relativen Phase $\varphi_n(t)$ in dem mathematischen Ausdruck des CPM-modulierten Basisbandsignals als

   $$\phi_n(j) = 2\pi \sum_{i=n-L+1}^{n} a_i h_{(i)} q_{n-i}(j), \quad j = 0,1,...,2^N - 1;$$

   Erzielen eines relativen Phasenwertes $\varphi_n(j)$ entsprechend einer Kombination $[h_{(n)}, a_n, a_{n-1}, ..., a_{n-L+1}, j]$ gemäß dem diskreten Ausdruck von $\varphi_n(t)$ und

   Erstellen der Phasentabelle durch Nehmen von $[h_{(n)}, a_n, a_{n-1}, ..., a_{n-L+1}, j]$ als die Adressieradresse und Nehmen von $\varphi_n(j)$ als den relativen Phasenwert entsprechend der Adressieradresse,

   wobei $a_i$ ein $i$. $M$-äres Symbol bezeichnet, $a_i \ni \{\pm..., \pm(M-1)\}$, $h_{(1)}$ einen Modulationsindex entsprechend dem $i$. Symbol $a_i$ bezeichnet, ein Wert von $h_{(i)}$ periodisch mit einer Periode $R$ von einem Indexsatz $\{h_0, h_1, ..., h_{R-1}\}$ kommt, eine Indizierung $(i)$ $i$ Modulo $R$ bezeichnet, $q_{n-i}(j)$ ein diskreter Ausdruck einer Phasenimpulsfunktion $q(t)$ ist, $L$ eine Korrelationslänge ist und $j$ eine Sequenznummer eines Abtastpunktes ist.

3. CPM-Modulation-Digitalisierungsumsetzungsverfahren, das auf einem Tabellennachschlageverfahren basiert, nach Anspruch 2, wobei das Erzielen des diskreten Ausdrucks der relativen Phase $\varphi_n(t)$ in dem mathematischen Ausdruck des CPM-modulierten Basisbandsignals Folgendes umfasst:

   Schritt (1), Erzielen des mathematischen Ausdrucks $s(t) = \sqrt{\dfrac{2E}{T}} exp\{-j\varphi(1)\}$ des CPM-modulierten Basisbandsignals, wobei E Symbolenergie ist, $T$ eine Symbolperiode ist, $\varphi(t)$ eine Phase des modulierten Signals ist und dargestellt ist als:

   $$\varphi(t) = \pi \sum_{i=0}^{n-L} a_i h_{(i)} + 2\pi \sum_{i=n-L+1}^{n} a_i h_{(i)} q(t - iT), \quad nT \leq t < (n+1)T$$

angenommen wird, dass $\theta_{n-L} = \pi \sum_{i=0}^{n-L} a_i h_{(i)}$ und $\varphi_n(t) = 2\pi \sum_{i=n-L+1}^{n} a_i h_{(i)} q(t - iT)$, wobei $\theta_{n-L}$ eine kumulative Phase bezeichnet, $\varphi_n(t)$ eine relative Phase bezeichnet, $t$ die Zeit bezeichnet, $q(t)$ eine Phasenimpulsfunktion ist und dargestellt ist als:

$$q(t) = \begin{cases} 0, & t \le 0 \\ \int_0^t g(\tau)d\tau, & 0 < t \le LT \\ 1/2, & t > LT \end{cases}$$

wobei $g(t)$ eine Frequenzimpulsfunktion ist und
Schritt (2), Bestimmen des endgültigen diskreten Ausdrucks der relativen Phase $\varphi_n(t)$ durch:

Schritt (a), Diskretisieren von $q(t)$ in einem Intervall von $0 < t \le LT$, wobei unter der Annahme, dass $2^N$ Abtastpunkte in einer Symbolperiode vorhanden sind, ein diskreter Ausdruck von q(t) dargestellt ist als:

$$q_k(j) = q(t)\big|_{t=kT+jT_s}$$
$$= q(kT + jT_s), \quad k = 0,1,...,L - 1, j = 0,1,...,2^N - 1$$

wobei $T_S$ eine Abtastperiode bezeichnet,
Schritt (b), Diskretisieren von $\varphi_n(t)$ in einem Intervall von $0 < t \le LT$, gemäß einer Gleichung:

$$\phi_n(j) = \phi_n(t)\big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q\big((n - i)T + jT_s\big)$$

Schritt (c), Erzielen eines Ausdrucks $q((n-i)T + jTs) = q_{n-i}(j)$ von Schritt (a) und Einsetzen des Ausdrucks $q((n-i)T + jT_s) = q_{n-i}(j)$ in die Gleichung in Schritt (b), um den endgültigen diskreten Ausdruck von $\varphi_n(t)$ zu erzielen:

$$\phi_n(j) = 2\pi \sum_{i=n-L+1}^{n} a_i h_{(i)} q_{n-i}(j), \quad j = 0,1,...,2^N - 1$$

4. CPM-Modulation-Digitalisierungsumsetzungsverfahren, das auf einem Tabellennachschlageverfahren basiert, nach einem der Ansprüche 1 bis 3, wobei das Verfahren, wenn eine Phasentabelle nicht ausreicht, um Informationen zu der relativen Phase des CPM-modulierten Basisbandsignals zu enthalten, Folgendes umfasst:

Teilen der relativen Phase $\varphi_n(j)$ in zwei oder mehr Terme, deren Summe die relative Phase $\varphi_n(j)$ ist, und Erstellen von zwei oder mehr Phasentabellen und
Adressieren der zwei oder mehr Phasentabellen, wenn die CPM-Basisbandmodulation ausgeführt wird, basierend auf der Adressieradresse und Addieren der Adressergebnisse, um die relative Phase $\varphi_n(t)$ des CPM-modulierten Basisbandsignals zu erzielen.

5. CPM-Modulation-Digitalisierungsumsetzungsverfahren, das auf einem Tabellennachschlageverfahren basiert, nach Anspruch 4, das, wenn die relative Phase $\varphi_n(j)$ in zwei oder mehr Terme geteilt wird, deren Summe die relative Phase $\varphi_n(j)$ ist, Folgendes umfasst:
Teilen der Adressieradresse $[h_{(n)}, a_n, a_{n-1}, ..., a_{n-L+1}, j]$ in zwei oder mehr Adressieradressen durch Einbinden von $h_{(n)}$ und $j$ in die zwei oder mehr Adressieradressen und Teilen einer Sequenz $\{a_n, a_{n-1}, ..., a_{n-L+1}\}$ in zwei oder mehr Segmente, die entsprechend in die zwei oder mehr Adressieradressen einzubinden sind.

**6.** CPM-Digitalisierungsmodulationsmodul, das auf einem Tabellennachschlageverfahren basiert, Folgendes umfassend:

einen Impulsgenerator,
eine Verzögerungsvorrichtung,
eine Auswahlvorrichtung,
einen ersten Akkumulator,
eine Addiervorrichtung,
eine Adressiereinheit und
einen Trigonometriefunktionsspeicher, wobei:

der Impulsgenerator dafür konfiguriert ist, einen Symbolimpuls unter Steuerung eines Abtasttakts als ein Steuersignal der Verzögerungsvorrichtung und des ersten Akkumulators zu erzeugen,
die Verzögerungsvorrichtung für Folgendes konfiguriert ist: Verzögern eines aktuellen Eingangssymbols $a_n$ unter Steuerung des vom Impulsgenerator erzeugten Symbolimpulses, um ($L$+1) kontinuierliche Symbole $a_n$, $a_{n-1}$, ..., $a_{n-L+1}$, $a_{n-L}$ zu erzielen, und Ausgeben der ersten $L$ kontinuierlichen Symbole $a_n$, $a_{n-1}$, ..., $a_{n-L+1}$ in die Adressiereinheit und Ausgeben des letzten Symbols $a_{n-L}$ an die Auswahlvorrichtung,
wobei die Adressiereinheit für Folgendes konfiguriert ist: Erstellen einer Phasentabelle gemäß einem mathematischen Ausdruck eines CPM-modulierten Basisbandsignals, wobei die Phasentabelle eine Adressieradresse und eine relative Phase entsprechend der Adressieradresse umfasst, Empfangen der $L$ kontinuierlichen Symbole $a_n$, $a_{n-1}$, ..., $a_{n-L+1}$, die von der Verzögerungsvorrichtung ausgegeben werden, und Adressieren der erstellten Phasentabelle unter Verwendung einer Adressieradresse [$h_{(n)}$, $a_n$, $a_{n-1}$, ..., $a_{n-L+1}$, $d$], die durch die $L$ kontinuierlichen Symbole $a_n$, $a_{n-1}$, ..., $a_{n-L+1}$, gebildet ist, eines Modulationsindex $h_{(n)}$ entsprechend dem aktuellen Symbol, und einer aktuellen Abtastzeit $d$, um eine relative Phase $\varphi_n(t)$ zu erzielen, und Ausgeben der relativen Phase $\varphi_n(t)$ an die Addiervorrichtung,
die Auswahlvorrichtung dafür konfiguriert ist, das von der Verzögerungsvorrichtung ausgegebene Symbol $a_{n-L}$ zu empfangen, basierend auf dem Symbol $a_{n-L}$ und einem Modulationsindex $h_{(n-L)}$ entsprechend dem Symbol $a_{n-L}$ gemäß einer Gleichung $\delta = \pi h_{(n-L)} a_{(n-L)}$ einen kumulativen Phasenzuwachs $\delta$ zu berechnen und den kumulativen Phasenzuwachs an den ersten Akkumulator auszugeben,
der erste Akkumulator für Folgendes konfiguriert ist: Empfangen des von der Auswahlvorrichtung ausgegebenen kumulativen Phasenzuwachses $\delta$, Addieren des kumulativen Phasenzuwachses $\delta$ zu einer kumulativen Phase $\theta_{n-L-1}$ am Ende einer Periode eines vorherigen Symbols $a_{n-L-1}$ unter Steuerung des vom Impulsgenerator erzeugten Symbolimpulses, um am Ende einer Periode des Symbols $a_{n-L}$ eine kumulative Phase $\theta_{n-L}$ zu erzielen, und Ausgeben der kumulativen Phase $\theta_{n-L}$ an die Addiervorrichtung,
die Addiervorrichtung für Folgendes konfiguriert ist: Empfangen der von der Adressiereinheit ausgegebenen relativen Phase $\varphi_n(t)$ und der vom ersten Akkumulator ausgegebenen kumulativen Phase $\theta_{n-L}$, Addieren von $\varphi_n(t)$ zu in $\theta_{n-L}$, um eine Phase $\varphi_n(t)$ des CPM-modulierten Basisbandsignals zu erzielen, und Ausgeben der Phase $\varphi_n(t)$ an den Trigonometriefunktionsspeicher, und
der Trigonometriefunktionsspeicher dafür konfiguriert ist, die von der Addiervorrichtung ausgegebene Phase $\varphi_n(t)$ zu empfangen und in einer Sinustabelle und einer Cosinustabelle nachzuschlagen, um orthogonale Signale $\cos\varphi_n(t)$ und $\sin\varphi_n(t)$ zu erzielen, um die CPM-Basisbandmodulation abzuschließen.

**7.** CPM-Digitalisierungsmodulationsmodul, das auf einem Tabellennachschlageverfahren basiert, nach Anspruch 6, wobei die Adressiereinheit dafür konfiguriert ist, die Phasentabelle gemäß dem mathematischen Ausdruck des CPM-modulierten Basisbandsignals durch Folgendes zu erstellen:

Erzielen eines diskreten Ausdrucks der relativen Phase $\varphi_n(t)$ in dem mathematischen Ausdruck des CPM-modulierten Basisbandsignals als

$$\phi_n(j) = 2\pi \sum_{i=n-L+1}^{n} a_i h_{(i)} q_{n-i}(j), \quad j = 0, 1, ..., 2^N - 1;$$

Erzielen eines relativen Phasenwertes $\varphi_n(j)$ entsprechend einer Kombination [$h_{(n)}$, $a_n$, $a_{n-1}$, ..., $a_{n-L+1}$, $j$] gemäß dem diskreten Ausdruck von $\varphi_n(t)$, und
Erstellen der Phasentabelle durch Nehmen von [$h_{(n)}$, $a_n$, $a_{n-1}$, ..., $a_{n-L+1}$, $j$] als die Adressieradresse und Nehmen

von $\varphi_n(j)$ als den relativen Phasenwert entsprechend der Adressieradresse,
wobei $a_i$ ein *i. M*-äres Symbol bezeichnet, $a_i0\{\pm ...., \pm(M\text{-}1)\}$, $h_{(1)}$ einen Modulationsindex entsprechend dem i. Symbol $a_i$ bezeichnet, ein Wert von $h_{(i)}$ periodisch mit einer Periode *R* von einem Indexsatz $\{h_0, h_1, ..., h_{R\text{-}1}\}$ kommt, eine Indizierung (*i*) *i* Modulo *R* bezeichnet, $q_{n\text{-}i}(j)$ ein diskreter Ausdruck einer Phasenimpulsfunktion *q(t)* ist, *L* eine Korrelationslänge ist und *j* eine Sequenznummer eines Abtastpunktes ist.

8. CPM-Digitalisierungsmodulationsmodul, das auf einem Tabellennachschlageverfahren basiert, nach Anspruch 7, wobei das Erzielen des diskreten Ausdrucks der relativen Phase $\varphi_n(t)$ in dem mathematischen Ausdruck des CPM-modulierten Basisbandsignals Folgendes umfasst:

Schritt (1), Erzielen des mathematischen Ausdrucks $s(t) = \sqrt{\dfrac{2E}{T}} exp\{-j\varphi(1)\}$ des CPM-modulierten Basisbandsignals, wobei E Symbolenergie ist, *T* eine Symbolperiode ist, $\varphi(t)$ eine Phase des modulierten Signals ist und dargestellt ist als:

$$\varphi(t) = \pi \sum_{i=0}^{n-L} a_i h_{(i)} + 2\pi \sum_{i=n-L+1}^{n} a_i h_{(i)} q(t - iT), \qquad nT \le t < (n+1)T$$

angenommen wird, dass $\theta_{n-L} = \pi \sum_{i=0}^{n-L} a_i h_{(i)}$ und $\varphi_n(t) = 2\pi \sum_{i=n-L+1}^{n} a_i h_{(i)} q(t - iT)$, wobei $\theta_{n-L}$ eine kumulative Phase bezeichnet, $\varphi_n(t)$ eine relative Phase bezeichnet, *t* die Zeit bezeichnet, *q(t)* eine Phasenimpulsfunktion ist und dargestellt ist als:

$$q(t) = \begin{cases} 0, & t \le 0 \\ \int_0^t g(\tau)d\tau, & 0 < t \le LT \\ 1/2, & t > LT \end{cases}$$

wobei *g(t)* eine Frequenzimpulsfunktion ist und
Schritt (2), Bestimmen des endgültigen diskreten Ausdrucks der relativen Phase $\varphi_n(t)$ durch:

Schritt (a), Diskretisieren von *q(t)* in einem Intervall von $0 < t \le LT$, wobei unter der Annahme, dass $2^N$ Abtastpunkte in einer Symbolperiode vorhanden sind, ein diskreter Ausdruck von q(t) dargestellt ist als:

$$q_k(j) = q(t)\Big|_{t=kT+jT_s}$$
$$= q(kT + jT_s), \quad k = 0,1,...,L-1, \; j = 0,1,...,2^N - 1$$

wobei $T_s$ eine Abtastperiode bezeichnet,
Schritt (b), Diskretisieren von $\varphi_n(t)$ in einem Intervall von $0 < t \le LT$, gemäß einer Gleichung:

$$\phi_n(j) = \phi_n(t)\Big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q\big((n-i)T + jT_s\big)$$

Schritt (c), Erzielen eines Ausdrucks $q((n\text{-}i)T + jTs) = q_{n\text{-}i}(j)$ von Schritt (a) und Einsetzen des Ausdrucks $q((n\text{-}i)T + jT_s) = q_{n\text{-}i}(j)$ in die Gleichung in Schritt (b), um den endgültigen diskreten Ausdruck von $\varphi_n(t)$ zu erzielen:

$$\phi_n(j) = 2\pi \sum_{i=n-L+1}^{n} a_i h_{(i)} q_{n-i}(j), \quad j = 0, 1, \dots, 2^N - 1$$

**9.** CPM-Digitalisierungsmodulationsmodul, das auf einem Tabellennachschlageverfahren basiert, nach einem der Ansprüche 6 bis 8, wobei:

der Impulsgenerator einen zweiten Akkumulator und eine Entscheidungsvorrichtung umfasst,
der zweite Akkumulator dafür konfiguriert ist, kontinuierlich ein Symbolfrequenz-Steuerwort K unter Steuerung des Abtasttakts zu kumulieren, und
die Entscheidungsvorrichtung dafür konfiguriert ist, einen Symbolimpuls auszugeben, wenn der zweite Akkumulator überläuft,
der zweite Akkumulator ein *Q*-Bit-Akkumulator ist und
$K = 2^Q \cdot \frac{T_s}{T}, T_s$ eine Abtastperiode ist und *T* eine Symbolperiode ist.

**10.** CPM-Digitalisierungsmodulationsmodul, das auf einem Tabellennachschlageverfahren basiert, nach Anspruch 9, wobei die oberen N Bits eines Ergebnisses, das von dem zweiten Akkumulator ausgegeben wird, als die aktuelle Abtastzeit *d* genommen werden.

**11.** CPM-Digitalisierungsmodulationsmodul, das auf einem Tabellennachschlageverfahren basiert, nach einem der Ansprüche 6 bis 8 und 10, wobei:

wenn eine Phasentabelle, die in der Adressiereinheit verwendet wird, nicht ausreicht, um Informationen zu der relativen Phase des CPM-modulierten Basisbandsignals zu enthalten, die relative Phase $\varphi_n(j)$ in zwei oder mehr Terme geteilt wird, deren Summe die relative Phase $\varphi_n(j)$ ist, und zwei oder mehr Phasentabellen erstellt werden, und
wenn die CPM-Basisbandmodulation ausgeführt wird, die zwei oder mehr Phasentabellen basierend auf der Adressieradresse adressiert werden und Adressergebnisse addiert werden, um die relative Phase $\varphi_n(t)$ des CPM-modulierten Basisbandsignals zu erzielen.

**12.** CPM-Digitalisierungsmodulationsmodul, das auf einem Tabellennachschlageverfahren basiert, nach Anspruch 11, wobei die relative Phase $\varphi_n(j)$ in zwei oder mehr Terme geteilt wird, deren Summe die relative Phase $\varphi_n(j)$ ist, und die Adressieradresse $[h_{(n)}, a_n, a_{n-1}, \dots, a_{n-L+1}, j]$ in zwei oder mehr Adressieradressen geteilt wird durch Einbinden von $h_{(n)}$ und *j* in die zwei oder mehr Adressieradressen und Teilen einer Sequenz $\{a_n, a_{n-1}, \dots, a_{n-L+1}\}$ in zwei oder mehr Segmente, die entsprechend in die zwei oder mehr Adressieradressen einzubinden sind.

**Revendications**

**1.** Procédé de mise en œuvre de numérisation par modulation de phase continue, CPM, basé sur un procédé de consultation de table, comprenant les étapes ci-dessous consistant à :

étape (1), établir une table de phase selon une expression mathématique d'un signal modulé en bande de base CPM, dans laquelle la table de phase comprend une adresse d'adressage et une phase relative correspondant à l'adresse d'adressage ;
étape (2), générer une impulsion de symbole sous la commande d'une horloge d'échantillonnage, et retarder un symbole d'entrée en cours « $a_n$ » sous la commande de l'impulsion de symbole, en vue d'obtenir (*L*+1) symboles continus $a_n, a_{n-1}, \dots, a_{n-L+1}, a_{n-L}$ ;
étape (3), adresser la table de phase établie à l'étape (1), en utilisant une adresse d'adressage $[h_{(n)}, a_n, a_{n-1}, \dots, a_{n-L+1}, d]$ formée par un indice de modulation « $h_{(n)}$ » correspondant au symbole en cours « $a_n$ », « *L* » symboles continus $a_n, a_{n-1}, \dots, a_{n-L+1}$, et un temps d'échantillonnage en cours « *d* », en vue d'obtenir une phase relative « $\phi_n(t)$ » ;
étape (4), calculer un incrément de phase cumulative « $\delta$ » sur la base du symbole « $a_{n-L}$ » et d'un indice de modulation « $h_{(n-L)}$ » correspondant au symbole « $a_{n-L}$ » selon une équation $\delta = \pi h_{(n-L)} a_{n-L}$ ;
étape (5), ajouter l'incrément de phase cumulative « $\delta$ » à une phase cumulative « $\theta_{n-L-1}$ » à la fin d'une période d'un symbole précédent « $a_{n-L-1}$ » sous la commande de l'impulsion de symbole générée à l'étape (2), en vue d'obtenir une phase cumulative « $\theta_{n-L}$ » à la fin d'une période du symbole « $a_{n-L}$ » ;

étape (6), ajouter la phase relative « $\phi_n(t)$ » obtenue à l'étape (3), à la phase cumulative « $\theta_{n-L}$ » obtenue à l'étape (5), en vue d'obtenir une phase « $\varphi_n(t)$ » du signal modulé en bande de base CPM ; et

étape (7), consulter une table de sinus et une table de cosinus en utilisant la phase « $\varphi_n(t)$ », en vue d'obtenir des signaux orthogonaux « $\cos\varphi_n(t)$ » et « $\sin\varphi_n(t)$ », pour achever la modulation en bande de base CPM.

2. Procédé de mise en œuvre de numérisation par modulation CPM basé sur le procédé de consultation de table selon la revendication 1, dans lequel l'étape (1) d'établissement de la table de phase selon l'expression mathématique du signal modulé en bande de base CPM comprend les étapes ci-dessous consistant à :

obtenir une expression discrète de la phase relative « $\phi_n(t)$ » dans l'expression mathématique du signal modulé en bande de base CPM, comme suit :

$$\phi_n(j) = 2\pi \sum_{i=n-L+1}^{n} a_i h_{(i)} q_{n-i}(j), \quad j = 0,1,\ldots,2^N - 1 \; ;$$

obtenir une valeur de phase relative « $\phi_n(j)$ » correspondant à une combinaison $[h_{(n)}, a_n, a_{n-1}, \ldots, a_{n-L+1}, j]$ selon l'expression discrète de la phase relative « $\phi_n(t)$ » ; et

établir la table de phase en prenant $[h_{(n)}, a_n, a_{n-1}, \ldots, a_{n-L+1}, j]$ en tant que l'adresse d'adressage et en prenant « $\phi_n(j)$ » en tant que la valeur de phase relative correspondant à l'adresse d'adressage ;

dans lequel « $a_i$ » désigne un $i$-ième symbole à « $M$ » états de phase, $a_i \in \{\pm 1, \ldots, \pm(M\text{-}1)\}$, « $h_{(i)}$ » désigne un indice de modulation correspondant au $i$-ième symbole « $a_i$ », une valeur de « $h_{(i)}$ » provient d'un ensemble d'indices $\{h_0, h_1, \ldots, h_{R-1}\}$ périodiquement avec une période « $R$ », un indice « $(i)$ » désigne « $i$ modulo $R$ », « $q_{n-i}(j)$ » est une expression discrète d'une fonction d'impulsion de phase « $q(t)$ », « $L$ » est une longueur de corrélation, et « $j$ » est un numéro de séquence d'un point d'échantillonnage.

3. Procédé de mise en œuvre de numérisation par modulation CPM basé sur le procédé de consultation de table selon la revendication 2, dans lequel l'étape d'obtention de l'expression discrète de la phase relative « $\phi_n(t)$ » dans l'expression mathématique du signal modulé en bande de base CPM comprend les étapes ci-dessous consistant à :

étape (1), obtenir l'expression mathématique $s(t) = \sqrt{\dfrac{2E}{T}} \exp\{-j\varphi(t)\}$ du signal modulé en bande de base CPM, dans lequel « $E$ » est une énergie de symbole, « $T$ » est une période de symbole, « $\varphi(t)$ » est une phase du signal modulé et est représentée comme suit :

$$\varphi(t) = \pi \sum_{i=0}^{n-L} a_i h_{(i)} + 2\pi \sum_{i=n-L+1}^{n} a_i h_{(i)} q(t - iT), \qquad nT \leq t < (n+1)T$$

il est supposé que $\theta_{n-L} = \pi \sum_{i=0}^{n-L} a_i h_{(i)}$ et $\phi_n(t) = 2\pi \sum_{i=n-L+1}^{n} a_i h_{(i)} q(t - iT)$ dans lequel « $\theta_{n-L}$ » désigne une phase cumulative, « $\phi_n(t)$ » désigne une phase relative, « $t$ » désigne le temps, et « $q(t)$ » est une fonction d'impulsion de phase et est représentée comme suit :

$$q(t) = \begin{cases} 0, & t \leq 0 \\ \displaystyle\int_0^t g(\tau)d\tau, & 0 < t \leq LT \\ 1/2, & t > LT \end{cases}$$

dans lequel « $g(t)$ » est une fonction d'impulsion de fréquence ; et

étape (2), déterminer l'expression discrète finale de la phase relative « $\phi_n(t)$ » en mettant en œuvre les étapes ci-dessous consistant à :

étape (a), discrétiser « $q(t)$ » dans un intervalle de $0 < t \leq LT$, où, en supposant qu'il existe « $2^N$ » points d'échantillonnage dans une période de symbole, une expression discrète de « $q(t)$ » est représentée comme suit :

$$q_k(j) = q(t)\Big|_{t=kT+jT_s}$$
$$= q\left(kT + jT_s\right), \quad k = 0,1,...,L-1, j = 0,1,...,2^N-1$$

dans lequel « $T_s$ » désigne une période d'échantillonnage ;

étape (b), discrétiser « $\phi_n(t)$ » dans l'intervalle de $0 < t \le LT$ selon une équation donnée ci-dessous :

$$\phi_n(j) = \phi_n(t)\Big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q\left((n-i)T + jT_s\right)$$

étape (c), obtenir une expression $q((n-i)T + jT_s) = q_{n-i}(j)$ à partir de l'étape (a), et substituer l'expression $q((n-i)T + jT_s) = q_{n-i}(j)$ dans l'équation à l'étape (b), en vue d'obtenir l'expression discrète finale de « $\phi_n(t)$ » :

$$\phi_n(j) = 2\pi \sum_{i=n-L+1}^{n} a_i h_{(i)} q_{n-i}(j), \quad j = 0,1,...,2^N-1$$

4. Procédé de mise en œuvre de numérisation par modulation CPM basé sur le procédé de consultation de table selon l'une quelconque des revendications 1 à 3, dans lequel, dans le cas où une table de phase est insuffisante pour contenir des informations sur la phase relative du signal modulé en bande de base CPM, le procédé comprend les étapes ci-dessous consistant à :

diviser la phase relative « $\phi_n(j)$ » en deux termes ou plus dont la somme est la phase relative « $\phi_n(j)$ », et établir deux tables de phase ou plus ; et

adresser, lors de la mise en œuvre de la modulation en bande de base CPM, les deux tables de phase ou plus, sur la base de l'adresse d'adressage, et additionner des résultats d'adresse en vue d'obtenir la phase relative « $\phi_n(t)$ » du signal modulé en bande de base CPM.

5. Procédé de mise en œuvre de numérisation par modulation CPM basé sur le procédé de consultation de table selon la revendication 4, dans lequel, lors de l'étape de division de la phase relative « $\phi_n(j)$ » en deux termes ou plus dont la somme est la phase relative « $\phi_n(j)$ », le procédé comprend en outre l'étape ci-dessous consistant à :
diviser l'adresse d'adressage $[h_{(n)}, a_n, a_{n-1}, ..., a_{n-L+1}, j]$ en deux adresses d'adressage ou plus, en incluant les mêmes valeurs « $h_{(n)}$ » et « $j$ » dans les deux adresses d'adressage ou plus et en divisant une séquence $\{a_n, a_{n-1}, ..., a_{n-L+1}\}$ en deux segments ou plus devant être respectivement inclus dans les deux adresses d'adressage ou plus.

6. Module de numérisation par modulation CPM basé sur un procédé de consultation de table, comprenant :

un générateur d'impulsions ;
un retardateur ;
un sélecteur ;
un premier accumulateur ;
une additionneur ;
une unité d'adressage ; et
un magasin de stockage de fonctions trigonométriques, dans lequel :

le générateur d'impulsions est configuré de manière à générer une impulsion de symbole sous la commande d'une horloge d'échantillonnage, sous la forme d'un signal de commande du retardateur et du premier accumulateur ;
le retardateur est configuré de manière à : retarder un symbole d'entrée en cours « $a_n$ » sous la commande de l'impulsion de symbole générée par le générateur d'impulsions, en vue d'obtenir $(L+1)$ symboles continus $a_n, a_{n-1}, ..., a_{n-L+1}, a_{n-L}$ ; et fournir en sortie les premiers « $L$ » symboles continus $a_n, a_{n-1}, ..., a_{n-L+1}$, dans l'unité d'adressage, et fournir en sortie le dernier symbole « $a_{n-L}$ » au sélecteur ;

l'unité d'adressage est configurée de manière à : établir une table de phase selon une expression mathématique d'un signal modulé en bande de base CPM, dans laquelle la table de phase comprend une adresse d'adressage et une phase relative correspondant à l'adresse d'adressage ; recevoir les « L » symboles continus $a_n$, $a_{n-1}$, ..., $a_{n-L+1}$ fournis en sortie par le retardateur, et adresser la table de phase établie en utilisant une adresse d'adressage [$h(_n)$, $a_n$, $a_{n-1}$, ..., $a_{n-L+1}$, $d$] formée par le « L » symboles continus $a_n$, $a_{n-1}$, ..., $a_{n-L+1}$, un indice de modulation « $h(_n)$ » correspondant au symbole « $a_n$ », et un temps d'échantillonnage en cours « $d$ », en vue d'obtenir une phase relative « $\phi_n(t)$ » ; et fournir en sortie la phase relative « $\phi_n(t)$ » à l'additionneur ;

le sélecteur est configuré de manière à recevoir le symbole « $a_{n-L}$ » fourni en sortie par le retardateur, calculer un incrément de phase cumulative « $\delta$ » sur la base du symbole « $a_{n-L}$ » et d'un indice de modulation « $h(_{n-L})$ » correspondant au symbole « $a_{n-L}$ » selon une équation $\delta = \pi h(_{n-L}) a_{n-L}$ ; et fournir en sortie l'incrément de phase cumulative « $\delta$ » au premier accumulateur ;

le premier accumulateur est configuré de manière à : recevoir l'incrément de phase cumulative « $\delta$ » fourni en sortie par le sélecteur ; ajouter l'incrément de phase cumulative « $\delta$ » à une phase cumulative « $\theta_{n-L-1}$ » à la fin d'une période d'un symbole précédent « $a_{n-L-1}$ » sous la commande de l'impulsion de symbole générée par le générateur d'impulsions, en vue d'obtenir une phase cumulative « $\theta_{n-L}$ » à la fin d'une période du symbole « $a_{n-L}$ » ; et fournir en sortie la phase cumulative « $\theta_{n-L}$ » à l'additionneur ;

l'additionneur est configuré de manière à : recevoir la phase relative « $\phi_n(t)$ » fournie en sortie par l'unité d'adressage et la phase cumulative « $\theta_{n-L}$ » fournie en sortie par le premier accumulateur ; ajouter « $\phi_n(t)$ » à « $\theta_{n-L}$ », en vue d'obtenir une phase « $\varphi_n(t)$ » du signal modulé en bande de base CPM ; et fournir en sortie la phase « $\varphi_n(t)$ » au magasin de stockage de fonctions trigonométriques ; et

le magasin de stockage de fonctions trigonométriques est configuré de manière à recevoir la phase « $\varphi_n(t)$ » fournie en sortie par l'additionneur, et consulter une table de sinus et une table de cosinus en vue d'obtenir des signaux orthogonaux « $\cos\varphi_n(t)$ » et « $\sin\varphi_n(t)$ », pour achever la modulation en bande de base CPM.

7. Module de numérisation par modulation CPM basé sur un procédé de consultation de table selon la revendication 6, dans lequel l'unité d'adressage est configurée de manière à établir la table de phase selon l'expression mathématique du signal modulé en bande de base CPM en mettant en œuvre les étapes ci-dessous consistant à :

obtenir une expression discrète de la phase relative « $\phi_n(t)$ » dans l'expression mathématique du signal modulé en bande de base CPM, comme suit :

$$\phi_n(j) = 2\pi \sum_{i=n-L+1}^{n} a_i h_{(i)} q_{n-i}(j), \quad j = 0,1,...,2^N - 1 \quad ;$$

obtenir une valeur de phase relative « $\phi_n(j)$ » correspondant à une combinaison [$h(_n)$, $a_n$, $a_{n-1}$, ...,$a_{n-L+1}$, $j$] selon l'expression discrète de la phase relative « $\phi_n(t)$ » ; et

établir la table de phase en prenant [$h(_n)$, $a_n$, $a_{n-1}$, ..., $a_{n-L+1}$, $j$] en tant que l'adresse d'adressage et en prenant « $\phi_n(j)$ » en tant que la valeur de phase relative correspondant à l'adresse d'adressage ;

dans lequel « $a_i$ » désigne un $i$-ième symbole à « M » états de phase, $a_i \in \{\pm 1, ..., \pm(M-1)\}$, « $h_{(i)}$ » désigne un indice de modulation correspondant au $i$-ième symbole « $a_i$ », une valeur de « $h_{(i)}$ » provient d'un ensemble d'indices $\{h_0, h_1, ...,h_{R-1}\}$ périodiquement avec une période « R », un indice « (i) » désigne « $i$ modulo $R$ », « $q_{n-i}(j)$ » est une expression discrète d'une fonction d'impulsion de phase « $q(t)$ », « L » est une longueur de corrélation, et « $j$ » est un numéro de séquence d'un point d'échantillonnage.

8. Module de numérisation par modulation CPM basé sur un procédé de consultation de table selon la revendication 7, dans lequel l'étape d'obtention de l'expression discrète de la phase relative « $\phi_n(t)$ » dans l'expression mathématique du signal modulé en bande de base CPM comprend les étapes ci-dessous consistant à :

étape (1), obtenir l'expression mathématique $s(t) = \sqrt{\dfrac{2E}{T}} \exp\{-j\varphi(t)\}$ du signal modulé en bande de base CPM, dans lequel « E » est une énergie de symbole, « T » est une période de symbole, « $\varphi(t)$ » est une phase du signal modulé et est représentée comme suit :

$$\varphi(t) = \pi \sum_{i=0}^{n-L} a_i h_{(i)} + 2\pi \sum_{i=n-L+1}^{n} a_i h_{(i)} q(t-iT), \quad nT \le t < (n+1)T$$

il est supposé que $\theta_{n-L} = \pi \sum_{i=0}^{n-L} a_i h_{(i)}$ et $\phi_n(t) = 2\pi \sum_{i=n-L+1}^{n} a_i h_{(i)} q(t - iT)$, dans lequel « $\theta_{n-L}$ » désigne une phase cumulative, « $\phi_n(t)$ » désigne une phase relative, « $t$ » désigne le temps, et « $q(t)$ » est une fonction d'impulsion de phase et est représentée comme suit :

$$q(t) = \begin{cases} 0, & t \leq 0 \\ \int_0^t g(\tau)d\tau, & 0 < t \leq LT \\ 1/2, & t > LT \end{cases}$$

dans lequel « $g(t)$ » est une fonction d'impulsion de fréquence ; et

étape (2), déterminer l'expression discrète finale de la phase relative « $\phi_n(t)$ » en mettant en œuvre les étapes ci-dessous consistant à :

étape (a), discrétiser « $q(t)$ » dans un intervalle de $0 < t \leq LT$, où, en supposant qu'il existe « $2^N$ » points d'échantillonnage dans une période de symbole, une expression discrète de « $q(t)$ » est représentée comme suit :

$$q_k(j) = q(t)\Big|_{t=kT+jT_s}$$
$$= q(kT + jT_s), \quad k = 0,1,...,L-1, j = 0,1,...,2^N - 1$$

dans lequel « $T_s$ » désigne une période d'échantillonnage ;

étape (b), discrétiser « $\phi_n(t)$ » dans l'intervalle de $0 < t \leq LT$ selon une équation donnée ci-dessous :

$$\phi_n(j) = \phi_n(t)\Big|_{t=nT+jT_s}$$
$$= 2\pi \sum_{i=n-L+1}^{n} a_i h_{(i)} q(nT + jT_s - iT)$$
$$= 2\pi \sum_{i=n-L+1}^{n} a_i h_{(i)} q\big((n-i)T + jT_s\big)$$

étape (c), obtenir une expression $q((n-i)T + jT_s) = q_{n-i}(j)$ à partir de l'étape (a), et substituer l'expression $q((n-i)T + jT_s) = q_{n-i}(j)$ dans l'équation à l'étape (b), en vue d'obtenir l'expression discrète finale de « $\phi_n(t)$ » :

$$\phi_n(j) = 2\pi \sum_{i=n-L+1}^{n} a_i h_{(i)} q_{n-i}(j), \quad j = 0,1,...,2^N - 1$$

9. Module de numérisation par modulation CPM basé sur un procédé de consultation de table selon l'une quelconque des revendications 6 à 8, dans lequel :

le générateur d'impulsions comprend un second accumulateur et un dispositif de décision ;
le second accumulateur est configuré de manière à accumuler en continu un mot de commande de fréquence de symbole « K » sous la commande de l'horloge d'échantillonnage ; et
le dispositif de décision est configuré de manière à fournir en sortie une impulsion de symbole lors d'un dépassement de capacité du second accumulateur ;
le second accumulateur est un accumulateur à $Q$ bits ; et
$K = 2^Q \cdot \dfrac{T_s}{T}$, « $T_s$ » est une période d'échantillonnage et « $T$ » est une période de symbole.

10. Module de numérisation par modulation CPM basé sur un procédé de consultation de table selon la revendication 9, dans lequel « N » bits supérieurs d'un résultat fourni en sortie par le second accumulateur sont pris comme le temps d'échantillonnage en cours « *d* ».

11. Module de numérisation par modulation CPM basé sur un procédé de consultation de table selon l'une quelconque des revendications 6 à 8 et 10, dans lequel :

dans le cas où une table de phase utilisée dans l'unité d'adressage est insuffisante pour contenir des informations sur la phase relative du signal modulé en bande de base CPM, la phase relative « $\phi_n(j)$ » est divisée en deux termes ou plus dont la somme est la phase relative « $\phi_n(j)$ », et deux tables de phase ou plus sont établies ; et lors de la mise en œuvre de la modulation en bande de base CPM, les deux tables de phase ou plus sont adressées sur la base de l'adresse d'adressage, et des résultats d'adresse sont additionnés en vue d'obtenir la phase relative « $\phi_n(t)$ » du signal modulé en bande de base CPM.

12. Module de numérisation par modulation CPM basé sur un procédé de consultation de table selon la revendication 11, dans lequel la phase relative « $\phi_n(j)$ » est divisée en deux termes ou plus dont une somme est la phase relative « $\phi_n(j)$ », et l'adresse d'adressage [$h_{(n)}$, $a_n$, $a_{n-1}$, ...,$a_{n-L+1}$, $j$] est divisée en deux adresses d'adressage ou plus, en incluant les mêmes valeurs « $h_{(n)}$ » et « $j$ » dans les deux adresses d'adressage ou plus et en divisant une séquence {$a_n$, $a_{n-1}$, ...,$a_{n-L+1}$} en deux segments ou plus devant être respectivement inclus dans les deux adresses d'adressage ou plus.

**Figure 1**

Figure 2

Figure 3

**Figure 4**

**Figure 5**

34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510993516

- CN 102387098 A

**Non-patent literature cited in the description**

- **ZENG XIANGWEN.** FPGA IMPLEMENTATION OF CPM MODULATOR. *Tactical Communication Research,* September 2010, vol. 7 (3), 49-51

- **JIA ZHE ; ZHENG XIANG.** DESIGN AND FPGA IMPLEMENTATION OF QUATERNARY CPM MODULATOR. *Telecommunication Engineering,* 2006